# EUROPÄISCHE PATENTSCHRIFT

(11) **EP 4 024 569 B1**
(45) Veröffentlichungstag und Bekanntmachung des Hinweises auf die Patenterteilung: **11.10.2023**
(21) Anmeldenummer: 21217259.7
(22) Anmeldetag: 23.12.2021
(51) Int. Cl.: H01M 10/6553, H01M 10/6557, H01M 50/213, H01M 50/271, H01M 50/287, H01M 50/342, H01M 50/543, H01M 50/569, H01M 10/42, H01M 10/48

(54) **BATTERIEVERBUND MIT MINDESTENS ZWEI BATTERIEN**
BATTERY SYSTEM WITH AT LEAST TWO BATTERIES
BLOC-BATTERIE POURVU D'AU MOINS DEUX BATTERIES

(30) Priorität: 29.12.2020 DE 102020135025
(43) Veröffentlichungstag der Anmeldung: 06.07.2022
(73) Patentinhaber: fischer Power Solutions GmbH, 77855 Achern (DE)
(72) Erfinder: FISCHER, JULIAN, 77876 Kappelrodeck (DE)
(74) Vertreter: Gesthuysen Patentanwälte

(56) Entgegenhaltungen:
- DE-A1-102011 016 899
- DE-A1-102012 112 294
- DE-A1-102017 102 972

## Beschreibung

Die Erfindung betrifft einen Batterieverbund mit mindestens zwei Batterien und mindestens einem elektrischen Verbundleiter.

Der Batterieverbund ist sowohl für eine Versorgung von Verbrauchern mit elektrischer Energie als auch zur Speicherung von elektrischer Energie vorgesehen, die von Generatoren erzeugt wird. Der Batterieverbund ist insbesondere auch als Pufferbatterieverbund vorgesehen, also als ein Batterieverbund, der bei Ausfall eines Generators eine Versorgung von Verbrauchern übernimmt und/oder der von Generatoren erzeugte elektrische Energie zwischenspeichert, bevor sie von Verbrauchern verbraucht wird. Auch ist er zur Kompensation von Lastspitzen durch Verbraucher und/oder Erzeugungsspitzen durch Generatoren vorgesehen. Er ist geeignet, Notstromaggregate, die einen Verbrennungsmotor aufweisen, zu ersetzen. Demnach ist der Batterieverbund hochleistungsfähig. Verbraucher finden sich zum Beispiel in industriellen Anlagen in Form von Pumpen, Servern oder ganzen Rechenzentren. Generatoren sind zum Beispiel Brennstoffzellen, Fotovoltaikanlagen und Windkraftanlagen.

Jede der Batterien weist ein Batteriegehäuse, einen ersten elektrischen Batteriepol, einen zweiten elektrischen Batteriepol, einen Batteriezulauf und einen Batterieablauf für ein Temperiermedium und mindestens eine Zelle auf.

Jede der Zellen weist einen ersten elektrischen Zellkontakt und einen zweiten elektrischen Zellkontakt auf. Bei der mindestens einen Zelle einer jeden der Batterien sind zum einen der erste Zellkontakt und der erste Batteriepol und zum anderen der zweite Zellkontakt und der zweite Batteriepol elektrisch miteinander verbunden. Eine elektrische Verbindung mit der Batterie erfolgt über den ersten und den zweiten Batteriepol. Wenn es heißt, eine erste Komponente, wie zum Beispiel der erste Zellkontakt, und eine zweite Komponente, wie zum Beispiel der erste Batteriepol, sind elektrisch miteinander verbunden, dann ist damit gemeint, dass diese elektrisch leitend miteinander verbunden sind.

Weiter weist jede der Zellen einen elektrischen Energiespeicher und ein Zellgehäuse auf. Der elektrische Energiespeicher ist im Zellgehäuse angeordnet und das Zellgehäuse umschließt den elektrischen Energiespeicher dicht für ein Temperiermedium. Demnach dringt ein Temperiermedium nicht in die Zelle ein. Der elektrische Energiespeicher weist einen negativen und einen positiven Pol auf. Zum Beispiel sind zum einen der negative Pol und der erste Zellkontakt und zum anderen der positive Pol und der zweite Zellkontakt elektrisch miteinander verbunden. Dann wird der erste Zellkontakt auch als Minuspol und der zweite Zellkontakt auch als Pluspol bezeichnet. Aus dem Stand der Technik bekannte Zellen sind zum Beispiel Lithium-Ionen-Zellen.

Jedes der Batteriegehäuse weist einen Batterieboden, einen Batterieträger und einen Batteriedeckel auf. Der Batterieboden, der Batterieträger und der Batteriedeckel eines jeden der Batteriegehäuse umschließen einen Batterieinnenraum, der abgesehen vom Batteriezulauf und Batterieablauf dicht für ein Temperiermedium ist. Die Dichtigkeit des Batterieinnenraums abgesehen vom Batteriezulauf und Batterieablauf für ein Temperiermedium bedeutet, dass das Temperiermedium nur über den Batteriezulauf und den Batterieablauf dem Batterieinnenraum zugeführt oder diesem entnommen werden kann.

Die mindestens eine Zelle einer jeden der Batterien ist im Batterieinnenraum der Batterie zur Umspülung mit einem Temperiermedium angeordnet. Die Anordnung der Zelle erfolgt dabei insbesondere durch den Batterieträger. Eine Temperatur einer Zelle muss in einem Temperaturbereich liegen, damit die Zelle zum einen ihre maximale Leistungsfähigkeit und zum anderen ihre maximale Lebensdauer erreicht. Damit die Zelle im Batteriegehäuse im Betrieb der Batterie eine Temperatur in diesem Temperaturbereich hat, wird sie von einem Temperiermedium umspült. Dabei werden eine Temperatur und eine Durchflussrate des Temperiermediums durch den Batterieinnenraum so gewählt, dass die Temperatur der Zelle in dem Temperaturbereich liegt. Ein Temperiermedium strömt durch den Batteriezulauf in den Batterieinnenraum hinein und strömt durch den Batterieablauf aus dem Batterieinnenraum hinaus.

Die mindestens zwei Batterien sind durch den mindestens einen Verbundleiter elektrisch miteinander verbunden. Wenn der Batterieverbund vollständig elektrisch angeschlossen ist, dann sind die Batteriepole mit elektrischen Leitern verbunden. Bei den Leitern handelt es sich zum einen um den mindestens einen Verbundleiter und zum anderen um andere Leiter zum Anschluss des Batterieverbunds an eine andere Komponente. Im Betrieb des Batterieverbunds erzeugen die Energiespeicher in den Zellen einen elektrischen Strom oder nehmen eine solchen auf, sodass ein elektrischer Strom über die Leiter und die Batteriepole durch die Batterien fließt. Dabei erzeugen die Energiespeicher Wärme. Da jeder der Batteriepole und Leiter einen elektrischen Widerstand aufweist, erzeugt der Strom auch Wärme in den Batteriepolen und Leitern. Da jede der Verbindungen zwischen den Batteriepolen und den Leitern einen elektrischen Widerstand aufweist, der zumeist höher ist als die Widerstände der Batteriepole und Leiter, erzeugt der Strom in den Verbindungen auch zumeist mehr Wärme als in den Batteriepolen und Leitern. Die durch den Strom erzeugte Wärme erwärmt die Energiespeicher, die Batteriepole, Leiter und Verbindungen und führt zu einer Erhöhung der elektrischen Widerstände. Die Erwärmung kann insbesondere an den Verbindungen auch zu Beschädigungen führen.

Aus der DE 102011016899 ist ein Akkupack mit indirekt gekühlten Kontaktpolen bekannt.

Aufgabe der vorliegenden Erfindung ist daher, einen Batterieverbund anzugeben, bei welchem eine Erwärmung der Batteriepole und der Verbindungen im Vergleich zum Stand der Technik reduziert ist.

Die Aufgabe wird durch einen Batterieverbund mit den Merkmalen von Anspruch 1 gelöst. Bei diesem Batterieverbund sind bei jeder der Batterien der erste Batteriepol durch den Batteriezulauf und der zweite Batteriepol durch den Batterieablauf aus dem Batterieinnenraum nach außen geführt und sind sowohl der Batteriezulauf als auch der Batterieablauf im Batteriedeckel angeordnet. Folglich sind alle Anschlüsse einer jeden der Batterien, also der Batteriezulauf, der Batterieablauf, der erste Batteriepol und der zweite Batteriepol, im Batteriedeckel angeordnet. Dadurch sind die Anschlüsse besser zugänglich, wodurch ein Anschluss der Batterie vereinfacht ist. Hinzu kommt, dass die Batterien des Batterieverbunds für gewöhnlich derart in Bezug auf das Erdschwerefeld angeordnet sind, dass die Batteriedeckel oben sind. Dadurch ist auf einfache Weise eine automatisierte Bestückung des Batterieverbunds mit den mindestens zwei Batterien möglich, wobei nach der Bestückung der Verbundkopf aufgesetzt wird. Gleiches gilt für eine automatisierte Bestückung der mindestens zwei Batterien mit der jeweils mindestens einen Zelle. Durch die Anordnung der Batteriezuläufe und der Batterieabläufe in den Batteriedeckeln ist dann auch sichergestellt, dass ein Temperiermedium in den Batterieinnenräumen verbleibt, wenn eine Undichtigkeit außerhalb der Batterieinnenräume auftritt. Eine Undichtigkeit kann zum Beispiel an oder vor einem Batteriezulauf oder Batterieablauf auftreten. Auch wenn eine der Batterien ausläuft und dadurch ein Temperiermedium aus ihrem Batterieinnenraum ausläuft, ist gewährleistet, dass ein Temperiermedium im Batterieinnenraum der mindestens einen anderen Batterie nicht ausläuft.

Weiter weist der Batterieverbund einen Verbundkopf auf und ist der Verbundkopf auf den Batteriedeckeln angeordnet. Der Verbundkopf weist einen Verbundzulaufkanal mit einem Verbundzulaufanschluss und einen Verbundablaufkanal mit einem Verbundablaufanschluss auf. Einerseits sind jeder der Batteriezuläufe und der Verbundzulaufkanal und andererseits jeder der Batterieabläufe und der Verbundablaufkanal unmittelbar und dicht für ein Temperiermedium miteinander verbunden. Der Batterieverbund ist abgesehen vom Verbundzulaufanschluss und vom Verbundablaufanschluss dicht für ein Temperiermedium.

Im Betrieb des Batterieverbunds strömt ein Temperiermedium über den Verbundzulaufanschluss in den Verbundzulaufkanal hinein und strömt über den Verbundablaufanschluss aus dem Verbundablaufkanal hinaus. Durch die Verbindungen einerseits der Batteriezuläufe mit dem Verbundzulaufkanal und andererseits der Batterieabläufe mit dem Verbundablaufkanal sind die einzelnen Batterien hydraulisch parallel zueinander geschaltet und strömt das Temperiermedium durch jede der Batterien.

Durch die hydraulische Parallelschaltung liegen Temperaturen der Batterien näher beieinander, als wenn die Batterien hydraulisch in Reihe geschaltet sind, wodurch eine Temperaturverteilung des Batterieverbunds homogener ist.

Durch das Strömen des Temperiermediums sind die Batteriepole durch das Temperiermedium umspült, welches die Batteriepole kühlt, also in den Batteriepolen entstehende Wärme abtransportiert. Durch den Abtransport von Wärme wird eine Erwärmung der Batteriepole zumindest reduziert und dadurch auch eine Erhöhung der Widerstände der Batteriepole. Da die Batteriepole und die Leiter durch die Verbindungen auch thermisch miteinander gekoppelt sind, werden auch die Leiter und die Verbindungen gekühlt. Somit wird auch eine Temperaturverteilung der Batterien homogener, wodurch ihre Lebensdauer steigt.

Durch die homogenere Temperaturverteilung sowohl der Batterien als auch des Batterieverbunds ist der Batterieverbund sowohl für höhere Impuls- als auch Dauerleistungen geeignet. Somit eignet sich der Batterieverbund auch für Anwendungen, die Hoch- und Höchstleistung in Bezug auf eine elektrische Kapazität des Batterieverbunds erfordern.

Da die ersten und zweiten Zellkontakte der Zellen im Betrieb des Batterieverbunds in Kontakt mit einem Temperiermedium sind, ist ein geeignetes Temperiermedium elektrisch isolierend, sodass die Zellen nicht über das Temperiermedium entladen werden. Es kann flüssig oder gasförmig sein oder eine Mischung aus mindestens einem flüssigen und einem gasförmigen Bestandteil aufweisen. Wenn es heißt, eine Komponente, wie zum Beispiel der erste Batteriepol, ist von einem Temperiermedium umspült, dann ist damit gemeint, dass die Komponente in unmittelbaren Kontakt mit dem Temperiermedium ist.

Aufgrund elektrochemischer Eigenschaften und Aufbauweise von Zellen entsteht im Betrieb einer Zelle am Pluspol der Zelle mehr Wärme als am Minuspol. Deshalb ist es vorteilhaft, dass der erste Batteriepol der Batterie der Minuspol und der zweite Batteriepol der Pluspol ist. Denn dann entsteht am zweiten Batteriepol mehr Wärme als am ersten Batteriepol und die am zweiten Batteriepol entstehende Wärme wird sogleich durch ein Temperiermedium von der Batterie abgeführt und nicht erst durch den Batterieinnenraum geführt, in welchem die Wärme zu einer höheren Erwärmung führt als die vom ersten Batteriepol abgeführte Wärme.

Im Folgenden werden zunächst Ausgestaltungen und Weiterbildungen der Batterien und danach des Batterieverbunds beschrieben.

Die Beschreibung der Ausgestaltungen und Weiterbildungen der Batterien erfolgt anhand einer Batterie, die eine Mehrzahl an Zellen aufweist. Bei jeder der Zellen ist der erste elektrische Zellkontakt auf einer ersten Fläche der Zelle und der zweite elektrische Zellkontakt auf einer der ersten Fläche gegenüberliegenden zweiten Fläche der Zelle angeordnet.

Die Batterie weist einen ersten elektrischen Zellverbinder und einen zweiten elektrischen Zellverbinder auf. Einerseits sind jeder der ersten Zellkontakte und der erste Zellverbinder und andererseits jeder der zweiten Zellkontakte und der zweite Zellverbinder elektrisch miteinander verbunden. Dadurch sind die Zellen der Batterie elektrisch parallel geschaltet.

Weiter sind einerseits der erste Zellverbinder und der erste Batteriepol und andererseits der zweite Zellverbinder und der zweite Batteriepol elektrisch miteinander verbunden. Die Zellkontakte und die Batteriepole sind somit mittelbar über die Zellverbinder elektrisch miteinander verbunden.

In einer Ausgestaltung der Batterie weisen der Batteriezulauf eine freie Batteriezulaufquerschnittsfläche und der Batterieablauf eine freie Batterieablaufquerschnittsfläche auf und ist die Batteriezulaufquerschnittsfläche kleiner als die Batterieablaufquerschnittsfläche. Die freien Querschnittsflächen sind die Querschnittsflächen, durch welche ein Temperiermedium strömbar ist. Dadurch, dass der Batteriezulauf ein kleinere freie Querschnittsfläche als der Batterieablauf hat, ist gewährleistet, dass sich im Batterieinnenraum kein übermäßiger Druck durch ein durch den Batterieinnenraum strömendes Temperiermedium aufbaut.

In einer weiteren Ausgestaltung sind die Zellen Rundzellen. Bei einer Rundzelle hat das Zellgehäuse die Form eines Zylinders mit einer runden Querschnittskontur. Der Zylinder weist eine erste und eine zweite runde Endfläche auf, die einander gegenüberliegen. Auf der ersten Endfläche ist der erste Zellkontakt und auf der zweiten Endfläche ist der zweite Zellkontakt angeordnet. Eine Verwendung von Rundzellen ist vorteilhaft, da auch bei einer unmittelbar aneinandergrenzenden Anordnung der Zellen zueinander durch die runde Querschnittskontur der Zellgehäuse Freiräume zwischen den Zellen verbleiben, durch welche ein Temperiermedium strömbar ist.

In einer weiteren Ausgestaltung weist der Batterieboden Bodenaufnahmen für die Zellen auf und sind die Zellen in die Bodenaufnahmen eingesetzt. Vorzugsweise sind die Bodenaufnahmen Zapfen. Die Bodenaufnahmen erleichtern einen Zusammenbau der Batterie. Beim Zusammenbau der Batterie werden die Zellen zunächst in den Batterieträger eingesetzt. Dann wird der Batterieboden auf den Batterieträger gesetzt, wodurch die Zellen in die Bodenaufnahmen eingesetzt werden. Die Zellen sind dann durch die Bodenaufnahmen angeordnet und lateral fixiert.

In einer weiteren Ausgestaltung ist der erste Zellverbinder zwischen dem Batterieboden und den Zellen angeordnet. Demnach ist der erste Zellverbinder zwischen dem Batterieboden und den ersten Zellkontakten angeordnet. Die Abfolge Batterieboden, dann erster Zellverbinder und dann Zellen vereinfacht den Aufbau der Batterie. Beim Zusammenbau der Batterie werden zunächst die Zellen in den Batterieträger eingesetzt. Dann werden die elektrischen Verbindungen zwischen dem ersten Zellverbinder und den ersten Zellkontakten hergestellt. Dann wird der Batterieboden auf den Batterieträger gesetzt. Neben den Zellen ist auch der erste Zellverbinder im Batterieinnenraum angeordnet. Folglich ist auch der erste Zellverbinder im Betrieb der Batterie von einem Temperiermedium umspült und dadurch gekühlt. Da auch jede der Verbindungen der ersten Zellkontakte und des ersten Zellverbinders und die Verbindung des ersten Zellverbinders und des ersten Batteriepols einen elektrischen Widerstand aufweist, erzeugt ein im Betrieb der Batterie fließender Strom Wärme in den Verbindungen. Dabei werden die Verbindungen vom Temperiermedium gekühlt.

Wenn der Batterieboden Bodenaufnahmen aufweist, in welchen die Zellen eingesetzt sind, und der erste Zellverbinder zwischen dem Batterieboden und den Zellen angeordnet ist, dann ist es vorteilhaft, wenn der erste Zellverbinder zu den Bodenaufnahmen passende Bodenausnehmungen aufweist. Denn durch die Bodenausnehmungen ist der erste Zellverbinder im Batterieboden angeordnet und lateral fixiert. Wenn die Bodenaufnahmen im Batterieboden Zapfen sind, dann sind die Bodenausnehmungen im ersten Zellverbinder zu den Zapfen passende Öffnungen.

In einer weiteren Ausgestaltung weist der Batterieträger auf einer dem Batterieboden gegenüberliegenden Ebene Trägeraufnahmen für die Zellen auf und sind die Zellen in die Trägeraufnahmen eingesetzt. Die in die Trägeraufnahmen eingesetzten Zellen sind durch die Trägeraufnahmen angeordnet und lateral fixiert. Wenn der Batterieboden Bodenaufnahmen aufweist, in welche die Zellen eingesetzt sind, und der Batterieträger auf einer dem Batterieboden gegenüberliegenden Ebene Trägeraufnahmen aufweist, in welche die Zellen ebenfalls eingesetzt sind, dann sind die Zellen im Batterieinnenraum vollständig fixiert. Somit ist eine weitere Fixierung der Zellen nicht erforderlich, wodurch der Herstellungsaufwand der Batterie reduziert ist. Insbesondere kommt kein Kleber zum Einsatz. Das ist vorteilhaft, da viele für die Fixierung geeignete Kleber nicht mit geeigneten Temperiermedien kompatibel sind. Jedenfalls ist die Kompatibilität sicherzustellen, was einen erheblichen Aufwand darstellt.

In einer Weiterbildung der vorherigen Ausgestaltung weist der erste Batteriepol eine Batteriepolhalterung auf und ist der erste Batteriepol mit der Batteriepolhalterung in eine der Trägeraufnahmen eingesetzt. Weiter ist die Batteriepolhalterung an die Trägeraufnahme angepasst, sodass der erste Batteriepol gegen ein Verdrehen fixiert ist. Vorzugsweise ist der erste Batteriepol stabförmig ausgebildet. In dieser Weiterbildung ist anstelle einer Zelle der erste Batteriepol in eine der Trägeraufnahmen eingesetzt. Vorzugsweise sind alle Trägeraufnahmen gleich ausgebildet, sodass sowohl die Zellen als auch der erste Batteriepol in diese einsetzbar sind. Durch die gleiche Ausbildung aller Trägeraufnahmen vereinfachen sich Konstruktion und Herstellung des Batterieträgers und damit der Batterie. Eine Fixierung des ersten Batteriepols gegen ein Verdrehen ist vorteilhaft, wenn der erste Batteriepol zum Beispiel über eine Polschraubverbindung mit einem weiteren elektrischen Leiter verbunden wird, da beim Festziehen und Lösen der Schraubverbindung auftretende Drehmomente dann vom Batterieträger und nicht vom ersten Zellverbinder aufgenommen werden. Ein Drehmoment zwischen dem ersten Batteriepol und dem ersten Zellverbinder könnte die Verbindung zwischen diesen beschädigen. Eine Schraubverbindung, wie zum Beispiel eine Polschraubverbindung, von zwei Komponenten miteinander hat den Vorteil, dass die Schraubverbindung auf einfache Weise beliebig oft hergestellt und gelöst werden kann, ohne dass die Komponenten dadurch verändert werden.

In einer Weiterbildung der vorstehenden Weiterbildung weist die Batteriepolhalterung mindestens eine Batteriepolausnehmung auf und ist die freie Batteriezulaufquerschnittsfläche durch die Batteriepolhalterung mit der mindestens einen Batteriepolausnehmung und die Trägeraufnahme bestimmt. Demnach strömt im Betrieb der Batterie ein Temperiermedium durch die mindestens eine Batteriepolausnehmung. Dadurch bilden die Batteriepolhalterung mit der mindestens einen Batteriepolausnehmung und die Trägeraufnahme eine Durchflussdrossel für ein strömendes Temperiermedium.

Wenn der Batterieträger auf einer dem Batterieboden gegenüberliegenden Ebene Trägeraufnahmen aufweist, dann ist es vorteilhaft, wenn mindestens eine der Trägeraufnahmen eine polygone Innenquerschnittskontur aufweist. Die polygone Innenquerschnittskontur ist insbesondere in Verbindung mit Rundzellen vorteilhaft. Denn dann sind Kontaktflächen zwischen den Rundzellen und den Trägeraufnahmen klein, wodurch eine Fläche der Rundzellen entsprechend groß ist, welche mit einem Temperiermedium im Kontakt steht. Sie ist auch vorteilhaft, wenn der erste Batteriepol eine Batteriepolhalterung aufweist und die Batteriepolhalterung eine zur Trägeraufnahme passende polygone Außenquerschnittskontur aufweist. Auf diese Weise ist der erste Batteriepol gegen ein Verdrehen fixiert.

In einer weiteren Ausgestaltung ist der zweite Zellverbinder zwischen dem Batteriedeckel und den Zellen angeordnet. Demnach ist der zweite Zellverbinder zwischen dem Batteriedeckel und den zweiten Zellkontakten angeordnet. Die Abfolge Batteriedeckel, dann zweiter Zellverbinder und dann Zellen vereinfacht den Aufbau der Batterie. Beim Zusammenbau der Batterie werden zunächst die Zellen in den Batterieträger eingesetzt. Dann werden die elektrischen Verbindungen zwischen dem zweiten Zellverbinder und den zweiten Zellkontakten hergestellt. Dann wird der Batteriedeckel auf den Batterieträger gesetzt. Der zweite Zellverbinder ist im Batterieinnenraum angeordnet. Folglich ist auch der zweite Zellverbinder im Betrieb der Batterie von einem Temperiermedium umspült und dadurch gekühlt. Da auch jede der Verbindungen der zweiten Zellkontakte und des zweiten Zellverbinders und die Verbindung des zweiten Zellverbinders und des zweiten Batteriepols einen elektrischen Widerstand aufweist, erzeugt ein im Betrieb der Batterie fließender Strom Wärme in den Verbindungen. Dabei werden die Verbindungen vom Temperiermedium gekühlt.

Wenn der Batterieträger auf einer dem Batterieboden gegenüberliegenden Ebene Trägeraufnahmen aufweist, dann ist es vorteilhaft, die vorstehende Ausgestaltung weiterzubilden, indem der zweite Zellverbinder zwischen den Trägeraufnahmen und dem Batteriedeckel angeordnet ist. Durch die Anordnung des zweiten Zellverbinders zwischen den Trägeraufnahmen und dem Batteriedeckel wird der Aufbau der Batterie weiter vereinfacht. Der zweite Zellverbinder ist vor dem Aufsetzen des Batteriedeckels auf den Batterieträger zugänglich. Vorzugsweise weist mindestens eine der Trägeraufnahmen eine Öffnung auf, die dem zweiten Zellverbinder nur einen Zugang zum zweiten Zellkontakt und keinen Zugang zum ersten Zellkontakt einer in die Trägeraufnahme eingesetzten Zelle freigibt. Durch diese Öffnung wird sichergestellt, dass der zweite Zellverbinder keine elektrische Verbindung zu einem der ersten Zellkontakte und dadurch einen Kurzschluss herstellt. Der zweite Zellverbinder weist passend zu der mindestens einen Öffnung einen Vorsprung auf.

In einer weiteren Ausgestaltung weist der zweite Batteriepol einen Batteriepolkragen auf. Weiter weisen der Batteriepolkragen und der Batterieträger eine formschlüssige Kragenverbindung auf, sodass der zweite Batteriepol gegen ein Verdrehen fixiert ist. Vorzugsweise ist der zweite Batteriepol stabförmig ausgebildet. Die formschlüssige Kragenverbindung ist vorteilhaft, da diese durch ein Einsetzen des zweiten Batteriepols in den Batterieträger entsteht, wodurch der Aufbau der Batterie vereinfacht ist. Eine Fixierung des zweiten Batteriepols gegen ein Verdrehen ist vorteilhaft, wenn der zweite Batteriepol zum Beispiel über eine Polschraubverbindung mit einem weiteren elektrischen Leiter verbunden wird, da beim Festziehen und Lösen der Polschraubverbindung auftretende Drehmomente vom Batterieträger und nicht vom zweiten Zellverbinder aufgenommen werden. Ein Drehmoment zwischen dem zweiten Batteriepol und dem zweiten Zellverbinder könnte die Verbindung zwischen diesen beschädigen. Vorzugsweise sind der Batteriepolkragen und der zweite Zellverbinder durch Laserschweißen miteinander verbunden.

In einer weiteren Ausgestaltung ist von den Komponenten Batterieboden, Batterieträger und Batteriedeckel mindestens eine der Komponenten aus Kunststoff. Vorzugsweise ist eine der Komponenten eine Spritzgusskomponente. Die Verwendung von Kunststoff ist vorteilhaft, da dieser kostengünstig und einfach verarbeitbar ist. Das gilt insbesondere für Spritzgusskomponenten. Vorzugsweise ist zumindest eine der genannten Komponenten aus einem elektrisch nicht leitenden Material.

In einer weiteren Ausgestaltung sind der Batterieboden und der Batterieträger aus voneinander verschiedenen Kunststoffen und weisen eine gemeinsame Bodenkontaktfläche auf. Weiter ist vorgesehen, dass der Batterieboden und der Batterieträger in der Bodenkontaktfläche durch Laserdurchstrahlschweißen stoffschlüssig miteinander verbunden sind. Dabei sind die Kunststoffe derart voneinander verschiedenen, dass einer der Kunststoffe für einen Laserstrahl beim Laserdurchstrahlschweißen wesentlich transparenter ist als der andere Kunststoff. Jedoch haben die Kunststoffe kompatible thermische Ausdehnungskoeffizienten, sodass mechanischen Spannungen zwischen den Komponenten aus den verschiedenen Kunststoffen akzeptabel sind. Zum Beispiel werden die verschiedenen Kunststoffe aus ähnlichen Materialgruppen ausgewählt. Beim Laserdurchstrahlschweißen wird der Laserstrahl derart geführt, dass er durch den transparenteren der beiden Kunststoffe auf den weniger transparenten der beiden Kunststoffe in der Bodenkontaktfläche trifft, den weniger transparenten der beiden Kunststoffe erhitzt, wodurch beide Kunststoffe aufgeschmolzen und auf diese Weise miteinander verschweißt werden. Eine Dichtung ist nicht erforderlich. Eine Dichtung stellt eine Schwachstelle dar. Sie kann zum Beispiel nicht ausreichend beständig gegen ein Temperiermedium sein oder durch Alterung ihre Dichtwirkung verlieren. Auch setzt eine Dichtung einen maximal zulässigen Druck im Batterieinnenraum herab.

Vorzugsweise sind der Batterieboden und der Batterieträger in der Bodenkontaktfläche als Nut-und-Feder ausgebildet und weisen entsprechend eine Nut-und-Feder-Verbindung auf. Zum Beispiel ist die Feder im Batterieträger und ist die Nut im Batterieboden ausgebildet. Die Nut-und-Feder-Verbindung hat verschiedene Vorteile. Zum einen ist durch sie die Bodenkontaktfläche vergrößert. Zum anderen sind der Batterieboden und der Batterieträger zusammengesetzt, aber noch nicht verschweißt, lateral zueinander fixiert, wodurch das Verschweißen vereinfacht ist. Weiter ist die Fläche, in welcher der Kunststoff aufgeschmolzen wird, vergrößert, sodass die Verschweißung über eine größere Fläche erfolgt, was Stabilität und Haltbarkeit verbessert. Auch ist durch die Ausbildung als Nut-und-Feder ein höherer Druck im Batterieinnenraum möglich, da Nut und Feder sich verkeilen.

In einer weiteren Ausgestaltung sind der Batteriedeckel und der Batterieträger aus voneinander verschiedenen Kunststoffen und weisen eine gemeinsame Deckelkontaktfläche auf. Weiter ist vorgesehen, dass der Batteriedeckel und der Batterieträger in der Deckelkontaktfläche durch Laserdurchstrahlschweißen stoffschlüssig miteinander verbunden sind. Vorzugsweise sind der Batteriedeckel und der Batterieträger in der Deckelkontaktfläche als Nut-und-Feder ausgebildet und weisen entsprechend eine Nut-und-Feder-Verbindung auf. Im Übrigen gelten die Ausführungen zur vorstehenden Ausgestaltung entsprechend.

Das stoffschlüssige Verbinden von einerseits dem Batterieboden und dem Batterieträger und andererseits dem Batteriedeckel und dem Batterieträger weist verschiedene Vorteile auf. Ein Vorteil ist die mechanische Stabilität, wodurch die Verbindung auch starken Vibrationen und Erschütterungen standhält. Ein weiterer Vorteil ist, dass diese Verbindungen ohne weitere Dichtmittel dicht für ein Temperiermedium sind. Aus dem Stand der Technik sind Temperiermedien bekannt, insbesondere elektrisch isolierende Temperiermedien, gegen die übliche Dichtmittel nicht beständig sind. Ein fortdauernder Kontakt eines solchen Dichtmittels mit einem solchen Temperiermedium würde das Dichtmittel zerstören, das Temperiermedium kontaminieren und die Dichtigkeit des Batteriegehäuses kompromittieren. Ein weiterer Vorteil ist, dass keine weiteren Verbindungsmittel zum Herstellen der Verbindung erforderlich sind. Ein solches weiteres Verbindungsmittel wären zum Beispiel Schraubverbindungen.

In einer weiteren Ausgestaltung ist von den Komponenten erster Zellverbinder und zweiter Zellverbinder mindestens eine der Komponenten aus einem Blech. Vorzugsweise ist eine der Komponenten aus einem gestanzten und umgeformten Blech. Ein Zellverbinder aus Blech ist vorteilhaft, da die Herstellung aus Blech einfach und kostengünstig ist. Das gilt insbesondere für einen Zellverbinder aus einem gestanzten und umgeformten Blech, da Stanzen und Umformen nur eine geringe Anzahl an Herstellungsschritten erfordert und oftmals auch in einem einzigen Herstellungsschritt umsetzbar sind. Bei kleineren Stückzahlen ist es oft vorteilhaft, das Stanzen durch Laserschneiden zu ersetzen.

In einer weiteren Ausgestaltung sind jeder der ersten Zellkontakte und der erste Zellverbinder durch Laserschweißen miteinander verbunden. Alternativ oder zusätzlich sind jeder der zweiten Zellkontakte und der zweite Zellverbinder durch Laserschweißen miteinander verbunden. Die einzelnen Verbindungen sind dabei elektrisch leitend und stellen auch eine mechanisch stabile Verbindung in Bezug auf Vibrationen und Erschütterungen dar. Die Verbindung der Zellkontakte und der Zellverbinder durch Laserschweißen ist vorteilhaft, da das Herstellen einer solchen Verbindung nur eine kurze Zeit dauert, wodurch auch nur eine geringe Erwärmung der Zellen stattfindet. Eine übermäßige Erwärmung einer Zelle führt zu deren Beschädigung. Hinzu kommt, dass diese Verbindungen im Vergleich zu auf andere Weise hergestellten Verbindungen einen geringeren elektrischen Widerstand aufweisen. Dadurch steigen insbesondere mögliche elektrische Impulsleistungen der Batterie. Alternativen zum Laserschweißen sind Ultraschallschweißen, Widerstandsschweißen und Reibschweißen.

In einer weiteren Ausgestaltung sind der erste Zellverbinder und der erste Batteriepol durch Laserschweißen miteinander verbunden. Alternativ oder zusätzlich sind der zweite Zellverbinder und der zweite Batteriepol durch Laserschweißen miteinander verbunden. Die Ausführungen zum Laserschweißen bei der vorstehenden Ausgestaltung gelten für diese Ausgestaltung entsprechend.

Nachdem zuvor Ausgestaltungen und Weiterbildungen der Batterien beschrieben worden sind, folgen jetzt Ausgestaltungen und Weiterbildungen des Batterieverbunds. Der Batterieverbund weist dabei mindestens zwei der zuvor beschriebenen Batterien auf.

In einer Ausgestaltung des Batterieverbunds sind der Verbundkopf und die Batterien miteinander verbunden. Vorzugsweise sind der Verbundkopf und die Batterien durch jeweils mindestens eine Verbundschraubverbindung miteinander verbunden. Das bedeutet, jede der Batterien und der Verbundkopf sind vorzugsweise durch mindestens eine Schraubverbindung miteinander verbunden.

In einer weiteren Ausgestaltung weist der Batterieverbund mindestens eine Durchflussdrossel auf, sodass ein Temperiermedium durch jede der Batterien mit einer ausreichenden Durchflussrate strömt. Die mindestens eine Durchflussdrossel ist dabei dort im Batterieverbund angeordnet, wo im Betrieb des Batterieverbunds ein Temperiermedium strömt. Vorzugsweise ist eine Durchflussrate durch die Durchflussdrossel einstellbar. Das bedeutet, dass Ihre Drosselwirkung auf die Durchflussrate einstellbar ist.

In einer Weiterbildung der vorstehenden Ausgestaltung ist die mindestens eine Durchflussdrossel im Verbundkopf angeordnet. Zum Beispiel ist die Durchflussdrossel im Verbundzulaufkanal oder im Verbundablaufkanal angeordnet. Dabei bietet sich jedoch die Anordnung der Durchflussdrossel im Verbundzulaufkanal an, da bei dieser Anordnung im Betrieb des Batterieverbunds ein Druck eines Temperiermediums in zumindest einem der Batterieinnenräume geringer ist, als wenn die Durchflussdrossel im Verbundablaufkanal angeordnet ist.

In einer Weiterbildung der vorstehenden Ausgestaltung oder der vorstehenden Weiterbildung ist die mindestens eine Durchflussdrossel in einer der Batterien angeordnet. Wenn zum Beispiel im Verbundkopf keine Durchflussdrossel angeordnet ist, dann ist mindestens eine Durchflussdrossel in einer der Batterien angeordnet. Wenn zum Beispiel im Verbundkopf mindestens eine Durchflussdrossel angeordnet ist, dann ist mindestens eine weitere Durchflussdrossel in einer der Batterien angeordnet. Zum Beispiel ist die Durchflussdrossel am Batteriezulauf oder am Batterieablauf angeordnet. Dabei bietet sich jedoch die Anordnung der Durchflussdrossel am Batteriezulauf an, da bei dieser Anordnung im Betrieb des Batterieverbunds ein Druck eines Temperiermediums im Batterieinnenraum geringer ist, als wenn die Durchflussdrossel im Batterieablauf angeordnet ist. Vorzugsweise ist neben der mindestens einen im Verbundkopf angeordneten Durchflussdrossel mindestens eine weitere Durchflussdrossel in einer der Batterien angeordnet.

In einer Weiterbildung der vorstehenden Weiterbildung ist die mindestens eine Durchflussdrossel zumindest teilweise durch den Batteriezulauf und den ersten Batteriepol gebildet und ist durch eine Form des ersten elektrischen Batteriepols eine Durchflussrate eines Temperiermediums eingestellt. Diese Weiterbildung ist vorteilhaft, da die Anzahl von Komponenten zur Realisierung der Durchflussdrossel reduziert ist. Hinzu kommt, dass durch die Realisierung der Durchflussdrossel am Batteriezulauf im Betrieb des Batterieverbunds ein Druck eines Temperiermediums im Batterieinnenraum geringer ist, als wenn die Durchflussdrossel im Batterieablauf angeordnet ist.

In einer weiteren Ausgestaltung des Batterieverbunds sind die ersten Batteriepole und die zweiten Batteriepole durch Polöffnungen im Verbundkopf hindurchgeführt. Das Hindurchführen der Batteriepole durch den Verbundkopf ist vorteilhaft, da alle Batteriepole von außen und von einer Seite des Batterieverbunds zugänglich sind. Dadurch ist insbesondere ein Montieren und Demontieren des mindestens einen elektrischen Verbundleiters und weiterer Leiter an den Batteriepolen erleichtert.

In einer Weiterbildung der vorstehenden Ausgestaltung sind einerseits jeder der ersten Batteriepole und der Verbundkopf und andererseits jeder der zweiten Batteriepole und der Verbundkopf jeweils durch eine Dichtung für ein Temperiermedium zueinander abgedichtet. Demnach sind jeder der Batteriepole und der Verbundkopf jeweils durch eine Dichtung dicht für ein Temperiermedium abgedichtet. Vorzugsweise sind die Dichtungen O-Ring-Dichtungen. Eine solche Dichtung bewirkt, dass ein Temperiermedium nicht an der Hindurchführung einer der Batteriepole durch den Verbundkopf nach außen dringen kann.

Wenn die Batteriepole durch den Verbundkopf hindurchgeführt sind, dann ist es vorteilhaft, wenn einerseits jeder der Batteriezuläufe und der Verbundkopf und andererseits jeder der Batterieabläufe und der Verbundkopf jeweils durch eine Dichtung für ein Temperiermedium zueinander abgedichtet sind. Vorzugsweise sind auch hier die Dichtungen O-Ring-Dichtungen. Eine solche Dichtung bewirkt, dass ein Temperiermedium nicht zwischen einem der Batteriezuläufe oder Batterieabläufe und dem Verbundkopf nach außen dringen kann. O-Ring-Dichtungen gibt es aus vielen Materialien, wodurch die Wahrscheinlichkeit hoch ist, dass es ein geeignetes Material gibt. Sie sind einfach herzustellen, kostengünstig und einfach austauschbar.

In einer Weiterbildung der vorstehenden Ausgestaltung weist jeder der ersten Batteriepole und jeder der zweiten Batteriepole jeweils eine Polschraubverbindung auf. Die Polschraubverbindungen fixieren den Verbundkopf und die Batteriedeckel zueinander und bewirken eine Dichtwirkung der Dichtungen. Zum Beispiel weist jede der Polschraubverbindungen ein Gewinde im Batteriepol und eine Mutter passend zum Gewinde im Batteriepol auf. Durch ein Festziehen der Muttern auf den Gewinden wird der Verbundkopf gegen die Batteriedeckel gepresst, wodurch sich die Dichtwirkung der Dichtungen einstellt. Wenn auch die Batteriepole und der Verbundkopf wie beschrieben jeweils durch eine Dichtung abgedichtet sind, wird durch die Polschraubverbindungen vorzugsweise auch die Dichtwirkung dieser Dichtungen hergestellt. Die Dichtwirkung ergibt sich vorzugsweise durch feste und starre Positionierung der Dichtungen.

In einer weiteren Ausgestaltung des Batterieverbunds sind der Verbundzulaufkanal und/oder der Verbundablaufkanal jeweils zumindest teilweise durch Bohrungen bzw. durch eine Bohrung gebildet. Zum Beispiel sind sowohl der Verbundzulaufkanal als auch der Verbundablaufkanal jeweils durch eine Bohrung durch den Verbundkopf gebildet. Vorzugsweise ist jede der Bohrungen eine Durchgangsbohrung durch den ganzen Verbundkopf, welche an einem ihrer beiden Enden verschlossen ist. Wenn die Batteriepole, wie beschrieben, durch den Verbundkopf hindurchgeführt sind, dann ist es vorteilhaft, wenn die Bohrungen die Hindurchführungen der Batteriepole durch den Verbundkopf anschneiden, sodass ein Temperiermedium unmittelbar aus der Bohrung des Verbundzulaufkanals in die Batteriezuläufe strömt und das Temperiermedium aus den Batterieabläufen unmittelbar in die Bohrung des Verbundablaufkanals strömt. Die auf diese Weise hergestellten Verbindungen zwischen einerseits dem Verbundzulaufkanal und den Batteriezuläufen und andererseits dem Verbundablaufkanal und den Batterieabläufen sind vorteilhaft, da sie auf einfache Weise hergestellt sind.

In einer weiteren Ausgestaltung sind mindestens in einem der Batteriedeckel ein erster Teil einer formschlüssigen Steckverbindung und im Verbundkopf ein zweiter Teil der formschlüssigen Verbindung ausgebildet. Dabei sind der erste Teil der formschlüssigen Verbindung und der zweite Teil der formschlüssigen Verbindung ineinander eingesetzt. Der mindestens eine Batteriedeckel und der Verbundkopf sind durch die formschlüssige Verbindung zueinander angeordnet und lateral fixiert.

In einer weiteren Ausgestaltung verbindet der mindestens eine Verbundleiter die ersten Batteriepole und die zweiten Batteriepole miteinander, sodass die Batterien elektrisch entweder parallel oder in Reihe geschaltet sind. Wenn der Batterieverbund zum Beispiel zwei Batterien aufweist, dann sind die Batterien durch einen Verbundleiter elektrisch in Reihe oder durch zwei Verbundleiter elektrisch parallel geschaltet. Vorzugsweise sind einerseits der mindestens eine Verbundleiter und andererseits die ersten Batteriepole und die zweiten Batteriepole durch Polschraubverbindungen miteinander verbunden. Diese Ausgestaltung bietet sich insbesondere in Kombination mit Ausgestaltungen an, in welchen, wie beschrieben, Polschraubverbindungen den Verbundkopf und die Batteriedeckel zueinander fixieren und auf diese Weise Dichtwirkungen von Dichtungen bewirken.

In einer weiteren Ausgestaltung ist auf einer Außenseite mindestens einer der Batteriedeckel eine Überdrucköffnung ausgebildet und ist die Überdrucköffnung durch eine spröde Berstscheibe als Überdruckventil dicht für ein Temperiermedium verschlossen. Weiter weist der Verbundkopf eine Überdruckausnehmung auf und überdeckt die Überdruckausnehmung die Überdrucköffnung zumindest teilweise, sodass ein Überdruck aus der Batterie über die Überdruckausnehmung abführbar ist. Die Überdrucköffnung verbindet den Batterieinnenraum mit einem Außenraum. Wenn ein Druck im Batterieinnenraum einer der Batterien einen Berstdruck überschreitet, dann birst die Berstscheibe, wodurch sie ihre Funktion als Überdruckventil erfüllt, und kann der Druck aus dem Batterieinnenraum über die Überdrucköffnung und die Überdruckausnehmung in den Außenraum entweichen.

In einer weiteren Ausgestaltung weist der Batterieverbund eine elektrische Verbundschaltung mit einer elektrischen Verbundschnittstelle auf. Die Verbundschaltung ist zur Überwachung des Batterieverbunds und zur Kommunikation über die Verbundschnittstelle ausgebildet. Die Ausbildung der Verbundschaltung zur Überwachung des Batterieverbunds ergibt sich insbesondere daraus, dass die Verbundschaltung mindestens einen Sensor aufweist, welcher eine Größe misst, die Aufschluss über einen Zustand des Batterieverbunds gibt. Die Ausbildung der Verbundschaltung zur Kommunikation ergibt sich insbesondere daraus, dass die Verbundschaltung zur Kommunikation über die Verbundschnittstelle mit einem weiteren elektrischen Gerät ausgebildet ist. Vorzugsweise weist die Verbundschnittstelle eine galvanische Trennung für die Kommunikation auf. Wenn die elektrische Verbundschaltung über die Verbundschnittstelle mit einem weiteren elektrischen Gerät verbunden ist, dann gewährleistet die galvanische Trennung der Verbundschnittstelle, dass die Verbundschaltung und das Gerät galvanisch getrennt sind. Vorzugsweise ist die Verbundschaltung zur Versorgung aus mindestens einer der Batterien des Batterieverbunds ausgebildet. Demnach wird die Verbundschaltung im Betrieb des Batterieverbunds mit elektrischer Energie aus einer der Batterien versorgt.

In einer Weiterbildung der vorstehenden Ausgestaltung ist die Verbundschaltung auf einer Verbundplatine realisiert und ist die Verbundplatine auf dem Verbundkopf angeordnet. Die Anordnung der Verbundplatine auf dem Verbundkopf bedeutet, dass die Verbundplatine auf dem Verbundkopf fixiert ist. Vorzugsweise weist der Verbundkopf eine Platinenausnehmung auf und ist die Verbundplatine in der Platinenausnehmung versenkt angeordnet. Durch die versenkte Anordnung der Verbundplatine ist diese geschützt und ein Platzbedarf des Batterieverbunds ist reduziert. Die versenkte Anordnung vergrößert auch den Abstand zwischen der Verbundschaltung und den Verbundleitern, sodass ein Spannungsüberschlag zwischen der Verbundschaltung und den Verbundleitern vermieden wird. Vorzugsweise sind die Verbundschaltung und die Verbundplatine mit einem Schutzlack überzogen, der sie gegen kondensierende Feuchtigkeit und Tropfen schützt.

Wenn der Batterieverbund die beschriebene Verbundschaltung und Verbundschnittstelle aufweist, dann ist es vorteilhaft, wenn die Verbundschaltung mindestens einen Temperatursensor aufweist und die Verbundschaltung zur Messung einer Temperatur mit dem Temperatursensor ausgebildet ist. Der Temperatursensor ist zur Messung einer Temperatur des Batterieverbunds ausgebildet und am Batterieverbund angeordnet. Eine Temperatur des Batterieverbunds gibt Aufschluss über einen Zustand des Batterieverbunds, insbesondere über die Batterien und die Zellen. Vorzugsweise ist auf einer Außenseite mindestens einer der Batteriedeckel eine Sensorausnehmung ausgebildet und ist der Temperatursensor in der Sensorausnehmung angeordnet. Durch die Anordnung des Temperatursensors in der Sensorausnehmung ist dieser in diese eingesetzt. Dadurch ist der Temperatursensor zum einen geschützt. Zum anderen ist die Sensorausnehmung im Batteriedeckel derart ausgebildet, dass ein thermischer Widerstand zwischen dem Temperatursensor und einem im Betrieb des Batterieverbunds im Batterieinnenraum befindlichen Temperiermediums möglichst gering ist.

In einer Weiterbildung weist die Verbundschaltung einen weiteren Temperatursensor auf. Weiter ist die Verbundschaltung zur Messung einer Temperatur mit dem weiteren Temperatursensor und vorzugsweise zum Vergleich mit der mit dem Temperatursensor gemessenen Temperatur ausgebildet. Ein Temperiermedium, welches im Betrieb des Batterieverbunds durch diesen strömt, darf im gesamten Batterieverbund eine Differenztemperatur nicht überschreiten. Diese Weiterbildung setzt die Erfassung von Temperaturen an verschiedenen Stellen des Batterieverbunds um, sodass Differenztemperaturen überwachbar sind. Vorzugsweise ist auf der Außenseite eines weiteren der Batteriedeckel eine Sensorausnehmung ausgebildet und ist der weitere Temperatursensor in der Sensorausnehmung angeordnet.

Wenn der Batterieverbund die beschriebene Verbundschaltung und Verbundschnittstelle aufweist, dann ist es auch vorteilhaft, wenn die Verbundschaltung zur Messung einer Spannung mindestens einer der Batterien und/oder zum Bestimmen und/oder zum Einstellen eines Ladezustands von mindestens einer der Batterien ausgebildet ist. Sowohl das Messen der Spannung als auch das Bestimmen des Ladezustands erfolgt jeweils mittels mindestens eines Sensors, welcher eine Größe misst. Sowohl die Spannung als auch der Ladezustand geben Aufschluss über den Zustand des Batterieverbunds. Zum Zustand des Batterieverbunds gehört insbesondere auch der Ladezustand. Die Ausbildung der Verbundschaltung zum Einstellen des Ladezustands von mindestens einer der Batterien bedeutet, dass die Verbundschaltung ausgebildet ist, den Ladezustand von mindestens zwei der Batterien aneinander anzugleichen.

Im Einzelnen ist eine Vielzahl von Möglichkeiten gegeben, den Batterieverbund auszugestalten und weiterzubilden. Dazu wird verwiesen sowohl auf die dem unabhängigen Anspruch nachgeordneten Ansprüche als auch auf die nachfolgende Beschreibung eines bevorzugten Ausführungsbeispiels in Verbindung mit der Zeichnung. In der Zeichnung zeigt
- Figur 1: eine perspektivische Ansicht eines Ausführungsbeispiels einer Batterie eines Ausführungsbeispiels eines Batterieverbunds,
- Figur 2: eine perspektivische Explosionsansicht der Batterie,
- Figur 3: eine in einer Längsrichtung geschnittene Ansicht der Batterie,
- Figur 4: eine erste perspektivische Explosionsansicht eines Batteriegehäuses der Batterie,
- Figur 5: eine zweite perspektivische Explosionsansicht des Batteriegehäuses,
- Figur 6: eine perspektivische Ansicht von Batteriepolen der Batterie,
- Figur 7: eine Schnittansicht durch einen Batterieträger der Batterie,
- Figur 8: eine Schnittansicht durch einen Batteriedeckel der Batterie,
- Figur 9: eine perspektivische Ansicht eines Ausführungsbeispiels eines Batterieverbunds,
- Figur 10: eine erste Ansicht einer Explosionsdarstellung des Batterieverbunds,
- Figur 11: eine zweite Ansicht der Explosionsdarstellung,

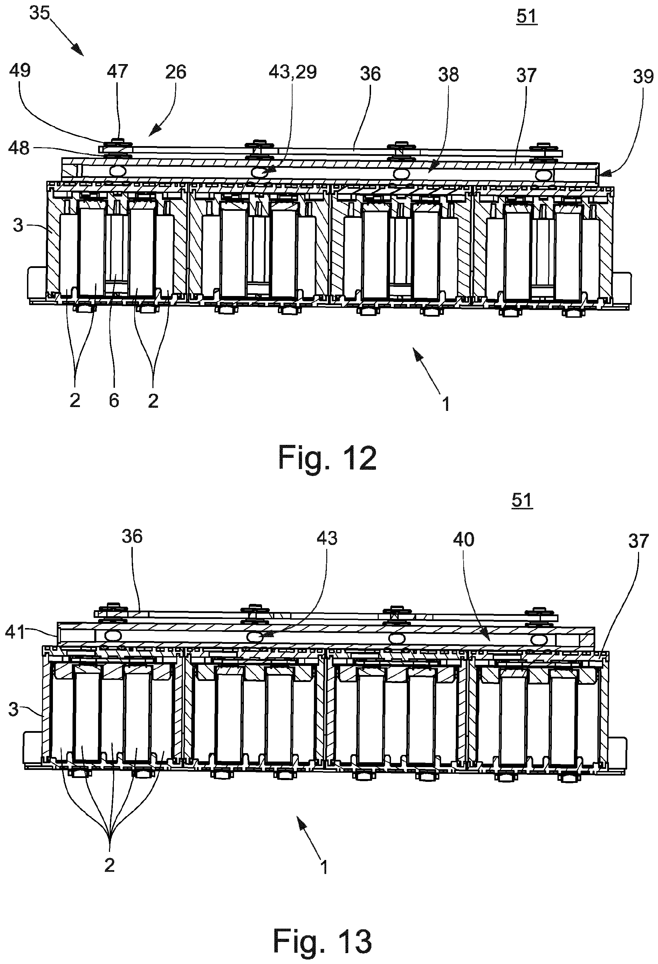

- Figur 12: eine in einer Längsrichtung geschnittene erste Ansicht des Batterieverbunds,
- Figur 13: eine in einer Längsrichtung geschnittene zweite Ansicht des Batterieverbunds,

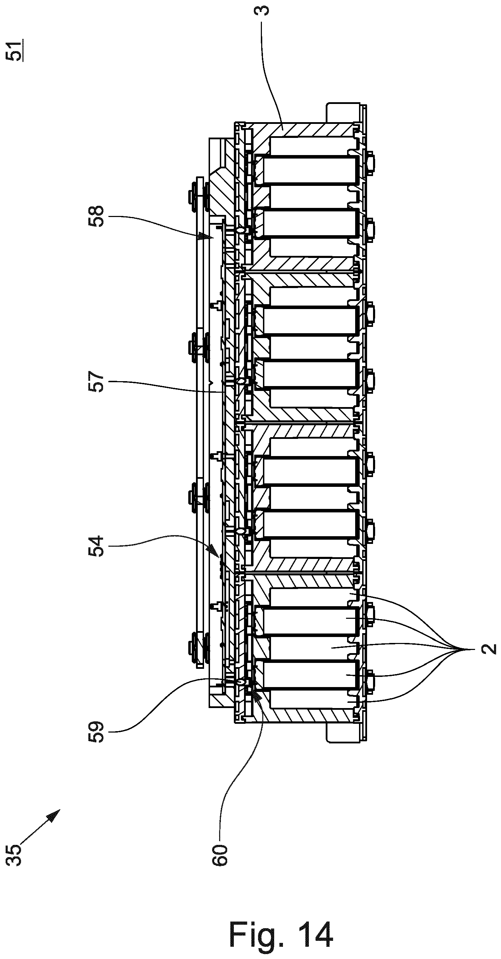

- Figur 14: eine in einer Längsrichtung geschnittene dritte Ansicht des Batterieverbunds und

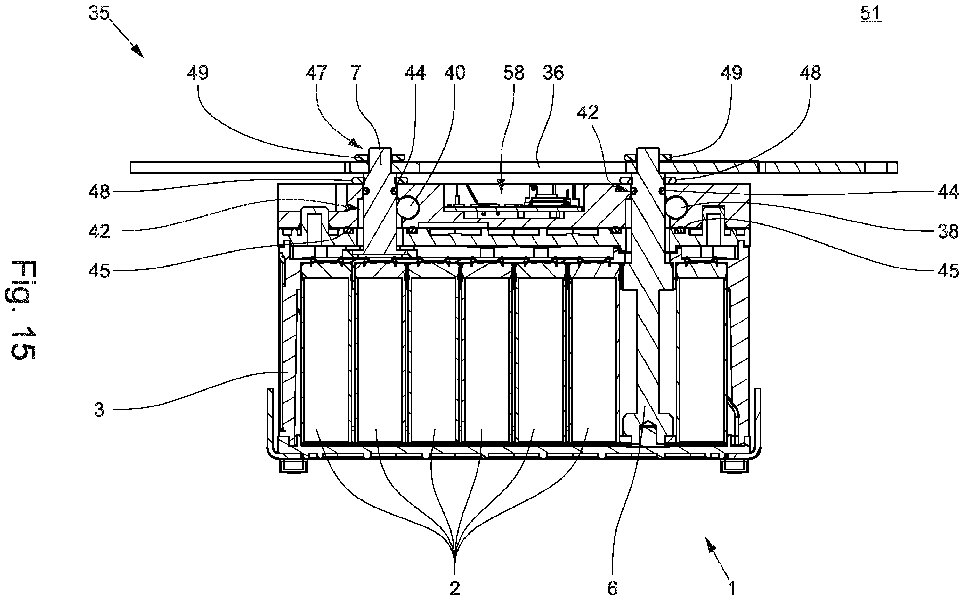

- Figur 15: eine in einen der Querrichtung geschnittene Ansicht des Batterieverbunds.

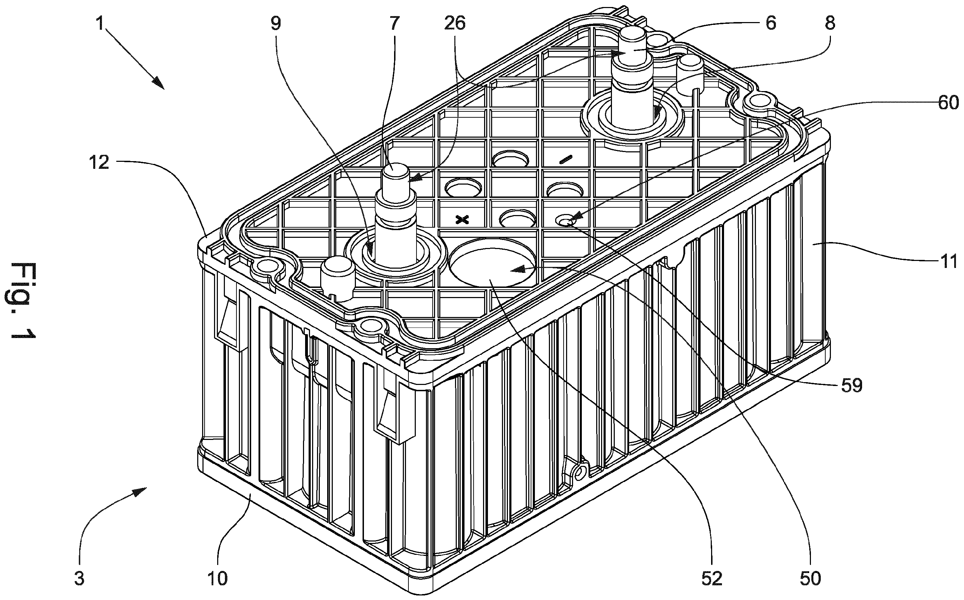

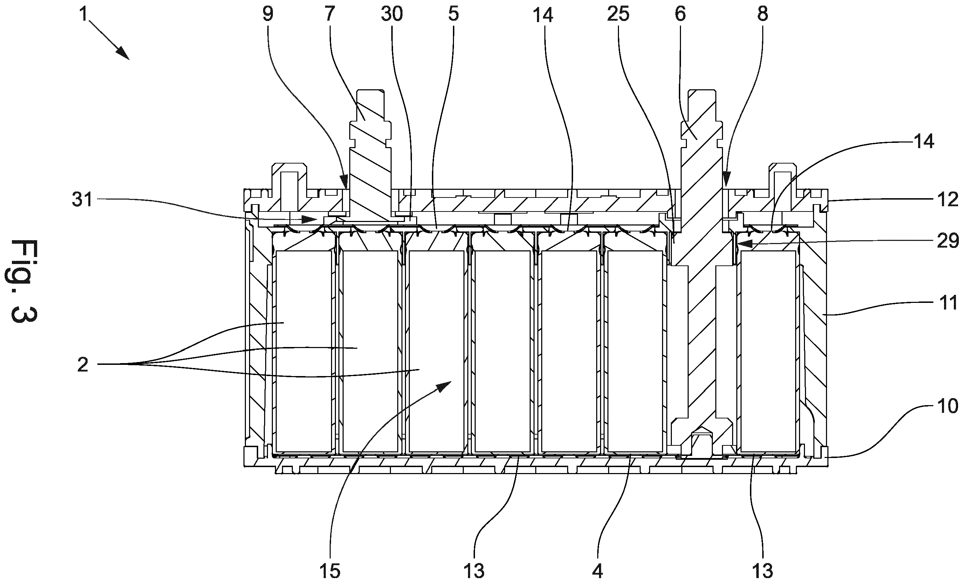

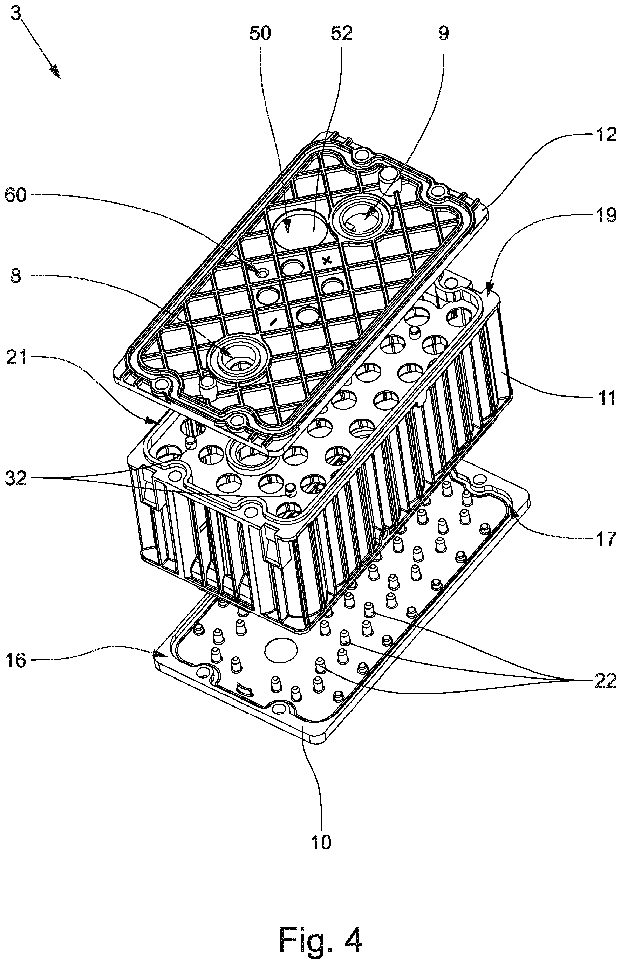

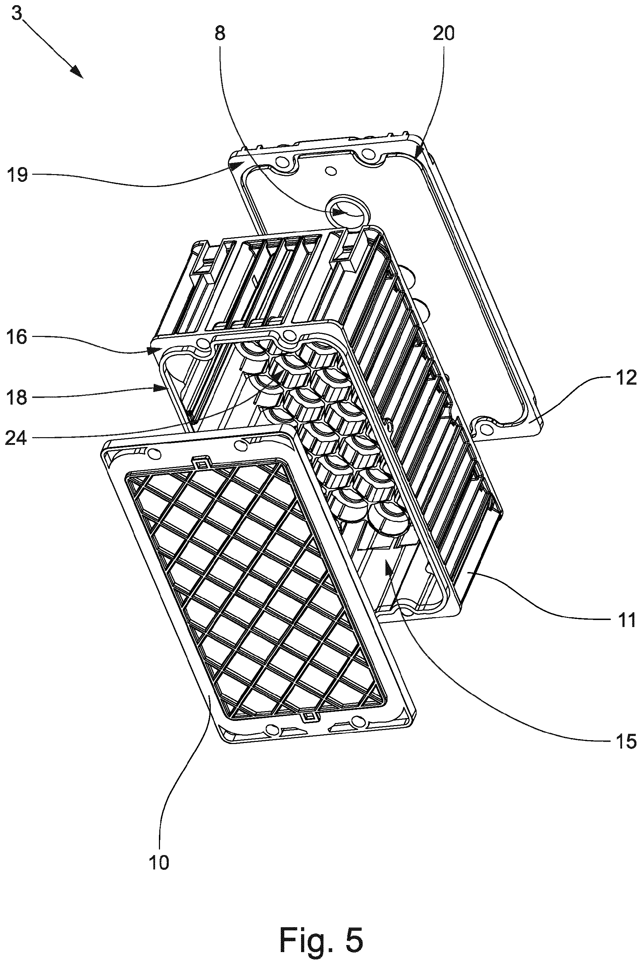

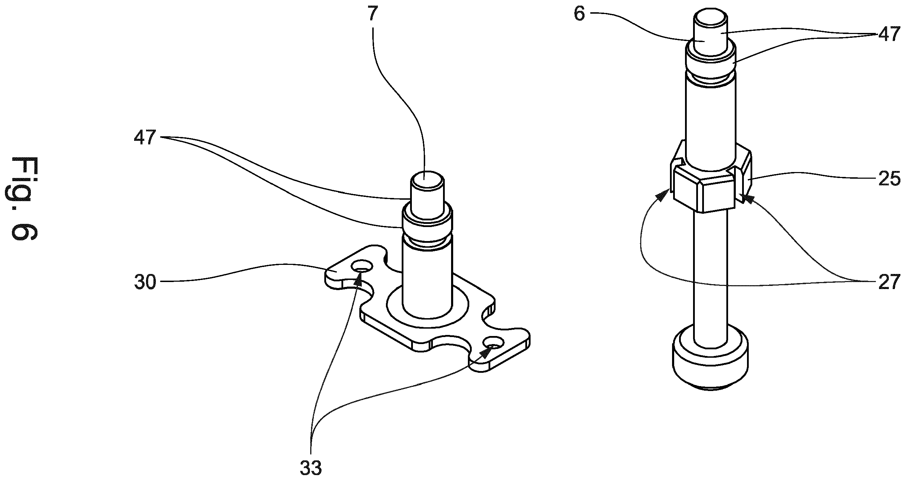

Die Figuren 1 bis 3 zeigen verschiedene Ansichten eines Ausführungsbeispiels einer Batterie 1. Die Batterie 1 dient sowohl der Versorgung von Verbrauchern mit elektrischer Energie als auch zur Speicherung von elektrischer Energie, die von Generatoren erzeugt wird. Die Batterie 1 weist eine Mehrzahl an Zellen 2, ein Batteriegehäuse 3, einen ersten elektrischen Zellverbinder 4, einen zweiten elektrischen Zellverbinder 5, einen ersten elektrischen Batteriepol 6 und einen zweiten elektrischen Batteriepol 7 auf. Weiter weist die Batterie 1 einen Batteriezulauf 8 und einen Batterieablauf 9 für ein Temperiermedium auf. Das Batteriegehäuse 3, welches ohne die zuvor genannten übrigen Komponenten der Batterie 1 in den Figuren 4 und 5 dargestellt ist, weist einen Batterieboden 10, einen Batterieträger 11 und einen Batteriedeckel 12 auf. Der erste Batteriepol 6 und der zweite Batteriepol 7 sind ohne die eingangs genannten übrigen Komponenten in Figur 6 dargestellt.

Der erste Batteriepol 6 ist durch den Batteriezulauf 8 geführt und der zweite Batteriepol 7 ist durch den Batterieablauf 9 geführt. Dadurch sind die Batteriepole 6, 7 im Betrieb der Batterie 1 durch ein Temperiermedium umspült, welches die Batteriepole 6, 7 kühlt. Sowohl der Batteriezulauf 8 als auch der Batterieablauf 9 sind im Batteriedeckel 12 angeordnet. Somit sind auch der erste Batteriepol 6 und der zweite Batteriepol 7 im Batteriedeckel 12 angeordnet.

Die Zellen 2 sind Rundzellen. Jede der Zellen 2 hat einen elektrischen Energiespeicher und ein Zellgehäuse in Zylinderform mit einer runden Querschnittskontur. Der elektrische Energiespeicher ist im Zellgehäuse angeordnet und das Zellgehäuse umschließt den elektrischen Energiespeicher dicht für ein Temperiermedium. Weiter weist jede der Zellen 2 einen ersten elektrischen Zellkontakt 13 auf einer ersten Fläche der Zelle 2 und einen zweiten elektrischen Zellkontakt 14 auf einer der ersten Fläche gegenüberliegenden zweiten Fläche der Zelle 2 auf.

Der Batterieboden 10, der Batterieträger 11 und der Batteriedeckel 12 umschließen einen Batterieinnenraum 15 abgesehen vom Batteriezulauf 8 und Batterieablauf 9 dicht für ein Temperiermedium. Somit kann ein Temperiermedium nur über den Batteriezulauf 8 und den Batterieablauf 9 dem Batterieinnenraum 15 zugeführt oder diesem entnommen werden. Die Zellen 2 sind im Batterieinnenraum 15 zur Umspülung mit einem Temperiermedium angeordnet. Durch die runde Querschnittskontur der Zellen 2 sind trotz der unmittelbar aneinandergrenzenden Anordnung der Zellen 2 Freiräume zwischen den Zellen 2 verblieben, durch welche ein Temperiermedium strömbar ist. Im Betrieb der Batterie 1 strömt ein Temperiermedium durch den Batteriezulauf 8 in den Batterieinnenraum 15 hinein und strömt durch den Batterieablauf 9 aus dem Batterieinnenraum 15 hinaus. Durch den beschriebenen Aufbau der Batterie 1 ist eine homogene und einheitliche Umströmung der Zellen 2 gegeben.

Der Batterieboden 10, der Batterieträger 11 und der Batteriedeckel 12 sind Spritzgusskomponenten aus Kunststoff. Der Batterieboden 10 und der Batterieträger 11 sind aus voneinander verschiedenen Kunststoffen und weisen eine gemeinsame Bodenkontaktfläche 16 auf. Die Bodenkontaktfläche 16 ist als Nut-und-Feder ausgebildet. Und zwar ist eine erste Nut 17 im Batterieboden 10 und ist eine erste Feder 18 im Batterieträger 11 ausgebildet. Der Batterieboden 10 und der Batterieträger 11 sind in der Bodenkontaktfläche 16 durch Laserdurchstrahlschweißen stoffschlüssig miteinander verbunden.

Auch der Batteriedeckel 12 und der Batterieträger 11 sind aus voneinander verschiedenen Kunststoffen und weisen eine gemeinsame Deckelkontaktfläche 19 auf. Die Deckelkontaktfläche 19 ist ebenfalls als Nut-und-Feder ausgebildet. Und zwar ist eine zweite Nut 20 im Batteriedeckel 12 und ist eine zweite Feder 21 im Batterieträger 11 ausgebildet. Der Batteriedeckel 12 und der Batterieträger 11 sind in der Deckelkontaktfläche 19 durch Laserdurchstrahlschweißen stoffschlüssig miteinander verbunden.

Der Batterieboden 10 weist Bodenaufnahmen 22 für die Zellen 2 auf, die Zapfen sind. Der erste Zellverbinder 4 ist zwischen dem Batterieboden 10 und den Zellen 2 angeordnet. Der erste Zellverbinder 4 weist zu den Bodenaufnahmen 22 passende Bodenausnehmungen 23 auf, die Öffnungen sind. Die Zellen 2 und der erste Zellverbinder 4 sind in die Bodenaufnahmen 22 eingesetzt, wodurch sie angeordnet und lateral fixiert sind. Die Abfolge Batterieboden 10, dann erster Zellverbinder 4 und dann Zellen 2 vereinfacht den Aufbau der Batterie 1.

Der Batterieträger 11 weist auf einer dem Batterieboden 10 gegenüberliegenden Ebene Trägeraufnahmen 24 für die Zellen 2 auf. Die Trägeraufnahmen 24 weisen eine polygone Innenquerschnittskontur in Form einer sechseckigen Querschnittskontur auf und sind alle gleich ausgebildet. Die Trägeraufnahmen 24 sind demnach wabenförmig. Durch die gleiche Ausbildung aller Trägeraufnahmen 24 vereinfachen sich Konstruktion und Herstellung des Batterieträgers 11. Die Zellen 2 sind in die Trägeraufnahmen 24 eingesetzt, wodurch sie lateral angeordnet und fixiert sind. Die polygone Innenquerschnittskontur der Trägeraufnahmen 24 in Verbindung mit der runden Querschnittskontur der Zellen 2 ist vorteilhaft, da Kontaktflächen zwischen den Zellen 2 und den Trägeraufnahmen 24 klein sind, wodurch eine Fläche der Zellen 2 entsprechend groß ist, welche mit einem Temperiermedium im Kontakt steht. Durch die Anordnung der Zellen 2 sowohl in den Bodenaufnahmen 22 als auch in den Trägeraufnahmen 24 sind die Zellen 2 vollständig angeordnet und vollständig fixiert, sodass eine weitere Fixierung der Zellen 2 nicht erforderlich ist. Das gilt insbesondere auch für Verwendungen der Batterie 1 in Umgebungen, die starke Vibrationen und Erschütterungen für die Batterie 1 bedeuten. Dazu zählen zum Beispiel Verwendungen in mobilen Vorrichtungen.

Der zweite Zellverbinder 5 ist zwischen dem Batteriedeckel 12 und den Zellen 2 angeordnet, und zwar ist er zwischen den Trägeraufnahmen 24 und dem Batteriedeckel 12 angeordnet. Die Abfolge Batteriedeckel 12, dann zweiter Zellverbinder 5 und dann Trägeraufnahmen 24 vereinfacht den Aufbau der Batterie 1.

Der erste Zellverbinder 4 und der zweite Zellverbinder 5 sind aus Blech, und zwar aus einem gestanzten und umgeformten Blech. Insbesondere sind die Öffnungen im ersten Zellverbinder 4 gestanzt.

Jeder der ersten Zellkontakte 13 und der erste Zellverbinder 4 sind elektrisch miteinander verbunden. Weiter sind jeder der zweiten Zellkontakte 14 und der zweite Zellverbinder 5 elektrisch miteinander verbunden. Somit sind die Zellen 2 elektrisch parallel geschaltet. Die Verbindungen sind durch Laserschweißen hergestellt.

Der erste Zellverbinder 4 und der erste Batteriepol 6 sind elektrisch miteinander verbunden. Weiter sind der zweite Zellverbinder 5 und der zweite Batteriepol 7 elektrisch miteinander verbunden. Die Verbindungen sind durch Laserschweißen hergestellt. Eine elektrische Verbindung mit der Batterie 1 erfolgt also über den ersten Batteriepol 6 und den zweiten Batteriepol 7. Im Betrieb der Batterie 1 ist jeder der Batteriepole 6, 7 mit einem elektrischen Leiter verbunden und fließt ein elektrischer Strom über die Leiter und die Batteriepole 6, 7 durch die Batterie 1.

Der erste Batteriepol 6 ist stabförmig ausgebildet und weist eine Batteriepolhalterung 25 auf. Der erste Batteriepol 6 ist mit der Batteriepolhalterung 25 in eine der Trägeraufnahmen 24 eingesetzt. Somit weist die Batterie 1 insgesamt 37 Zellen 2 auf. Die Batteriepolhalterung 25 ist an die Trägeraufnahme 24 angepasst. Demnach weist die Batteriepolhalterung 25 eine zur Trägeraufnahme 24 passende polygone äußere Querschnittskontur auf. Die Formgebung von der Batteriepolhalterung 25 und von der Trägeraufnahme 24 fixiert den ersten Batteriepol 6 gegen ein Verdrehen. Diese Fixierung ist vorteilhaft, da der erste Batteriepol 6 über eine Polschraubverbindung 26 mit einem weiteren elektrischen Leiter verbindbar ist und bei einem Festziehen und Lösen der Polschraubverbindung 26 auftretende Drehmomente vom Batterieträger 11 und nicht vom ersten Zellverbinder 4 aufgenommen werden.

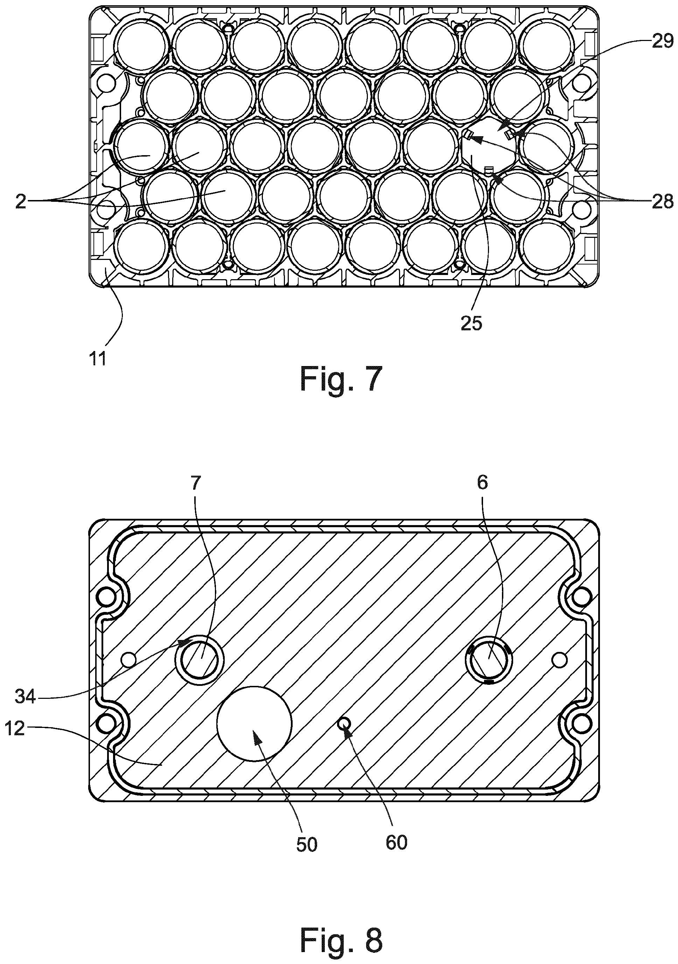

Die Batteriepolhalterung 25 weist eine Mehrzahl an Batteriepolausnehmungen 27 auf. Eine freie Batteriezulaufquerschnittsfläche 28 ist durch die Batteriepolhalterung 25 mit den Batteriepolausnehmungen 27 und die Trägeraufnahme 24 bestimmt, siehe Figur 7. Somit strömt im Betrieb der Batterie 1 ein Temperiermedium durch die Batteriepolausnehmungen 27. Demnach bilden die Batteriepolhalterung 25 mit den Batteriepolausnehmungen 27 und die Trägeraufnahme 24 zusammen eine Durchflussdrossel 29 für ein Temperiermedium am Batteriezulauf 8 in der Batterie 1. Somit ist die Durchflussdrossel 29 durch den Batteriezulauf 8 und den ersten Batteriepol 6 gebildet und ist durch eine Form des ersten Batteriepols 6 eine Durchflussrate eines Temperiermediums eingestellt.

Der zweite Batteriepol 7 ist ebenfalls stabförmig und weist zusätzlich einen Batteriepolkragen 30 auf. Weiter weisen der Batteriepolkragen 30 und der Batterieträger 11 eine formschlüssige Kragenverbindung 31 auf, sodass der zweite Batteriepol 7 gegen ein Verdrehen fixiert ist. Die Kragenverbindung 31 weist im Batterieträger 11 zwei Kragenvorsprünge 32 und im Batteriepolkragen 30 zwei entsprechende Kragenausnehmungen 33 auf. Diese Fixierung ist vorteilhaft, da der zweite Batteriepol 7 über eine Polschraubverbindung 26 mit einem weiteren elektrischen Leiter verbindbar ist und bei einem Festziehen und Lösen der Polschraubverbindung 26 auftretende Drehmomente vom Batterieträger 11 und nicht vom zweiten Zellverbinder 5 aufgenommen werden.

Eine freie Batterieablaufquerschnittsfläche 34 ist durch den zweiten Batteriepol 7 und den Batterieablauf 9 bestimmt, indem der zweite Batteriepol 7 durch den Batterieablauf 9 nach außen geführt ist, siehe Figur 8. Die Batterieablaufquerschnittsfläche 34 ist größer als die Batteriezulaufquerschnittsfläche 28, sodass sich im Batterieinnenraum 15 kein übermäßiger Druck durch ein durch den Batterieinnenraum 15 strömendes Temperiermedium aufbaut.

Der erste Batteriepol 6, der zweite Batteriepol 7, der Batteriezulauf 8 und der Batterieablauf 9 sind im Batteriedeckel 12 angeordnet, wodurch die Handhabung der Batterie 1 vereinfacht ist.

Die ersten elektrischen Zellkontakte 13 und die zweiten elektrischen Zellkontakte 14 der Zellen 2, der erste Zellverbinder 4 und der zweite Zellverbinder 5 sind elektrische Leiter und im Batterieinnenraum 15 angeordnet. Deshalb sind sie im unmittelbaren Kontakt mit einem Temperiermedium, welches durch den Batterieinnenraum 15 geströmt wird. Folglich ist ein geeignetes Temperiermedium elektrisch isolierend, sodass die Zellen 2 nicht über das Temperiermedium entladen werden. Hinzu kommt, dass auch die Verbindungen zwischen den ersten Zellkontakten 13 und dem ersten Zellverbinder 4, die Verbindungen zwischen den zweiten Zellkontakten 14 und dem zweiten Zellverbinder 5, die Verbindung zwischen dem ersten Zellverbinder 4 und dem ersten Batteriepol 6 und die Verbindung zwischen dem zweiten Zellverbinder 5 und dem zweiten Batteriepol 7 durch ein durch den Batterieinnenraum 15 strömendes Temperiermedium umspült und dadurch gekühlt sind. Das ist nicht nur in diesem Ausführungsbeispiel der Fall, sondern ein grundlegendes Merkmal.

Beim Zusammenbau der Batterie 1 werden zunächst der Batteriepolkragen 30 und der zweite Zellverbinder 5 elektrisch leitendend miteinander verbunden, zum Beispiel verschweißt. Dann werden die Zellen 2 in die Trägeraufnahmen 24 gesetzt und die zweiten Zellkontakte 14 und der zweite Zellverbinder 5 wie beschrieben miteinander verbunden. Dann werden der übrige zweite Batteriepol 7 und der Batteriepolkragen 30 miteinander verbunden, zum Beispiel verschweißt. Dann werden die ersten Zellkontakte 13 und der erste Zellverbinder 4 wie beschrieben miteinander verbunden. Dann werden zum einen der Batterieboden 10 und der Batterieträger 11 und zum anderen der Batteriedeckel 12 und der Batterieträger 11 wie beschrieben miteinander verbunden. Die Bodenaufnahmen 22 ordnen an und fixieren lateral dabei sowohl den ersten elektrischen Zellverbinder 4 als auch die Zellen 2.

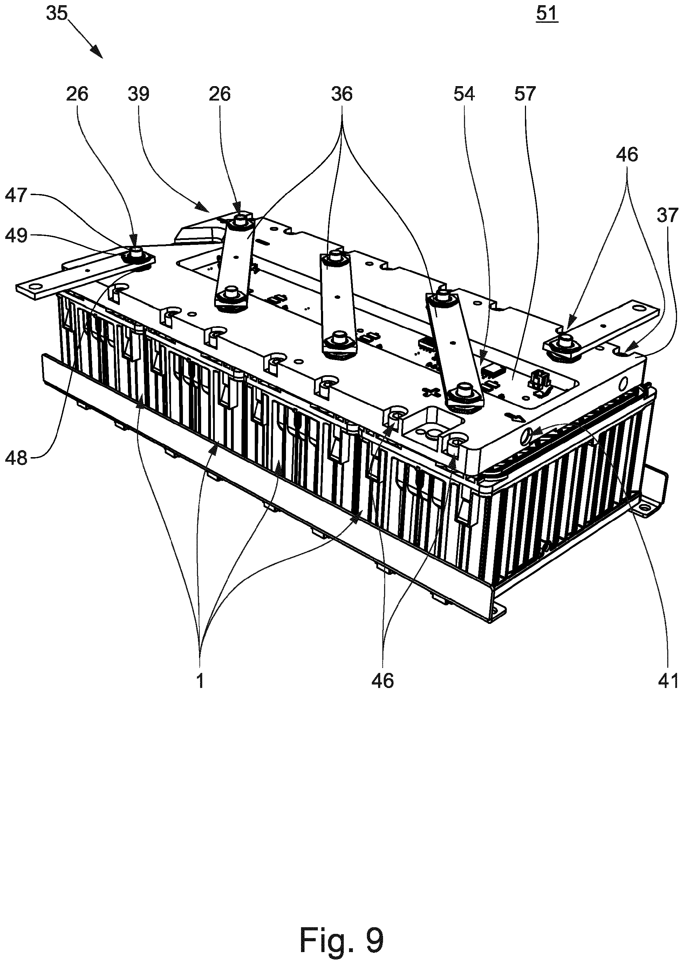

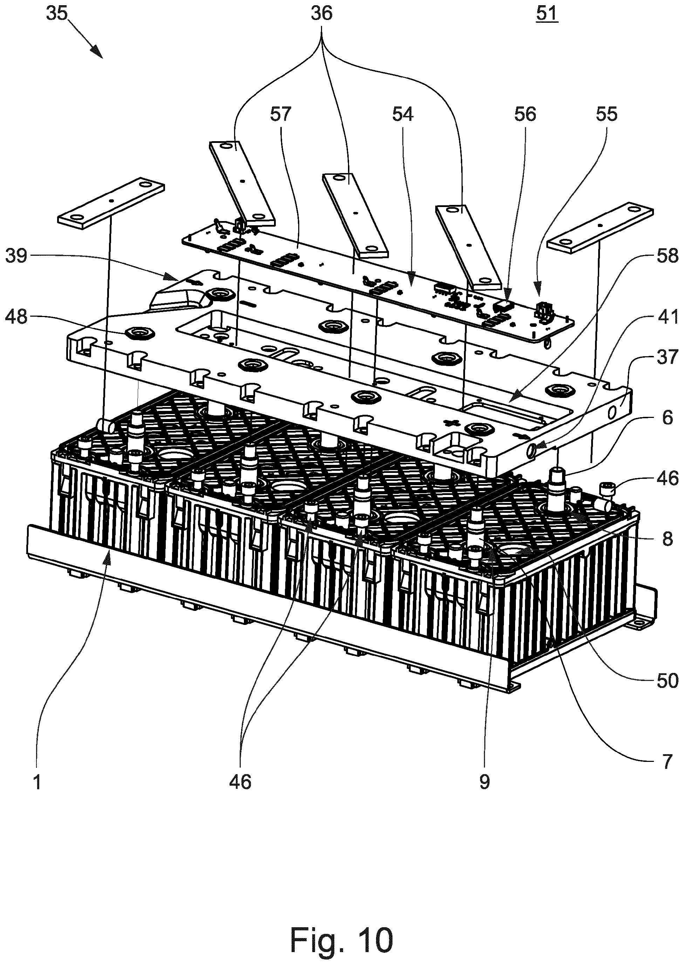

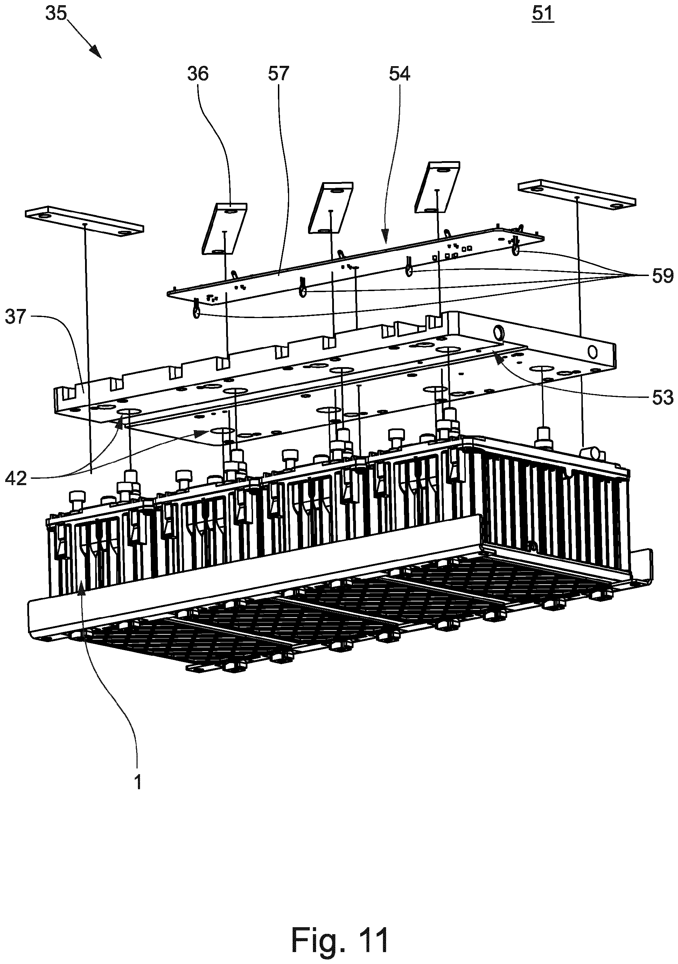

Figur 9 zeigt eine perspektivische Ansicht eines Ausführungsbeispiels eines Batterieverbunds 35. Die Figuren 10 und 11 zeigen unterschiedliche Ansichten einer Explosionsdarstellung des Batterieverbunds 35. Der Batterieverbund 35 ist sowohl für eine Versorgung von Verbrauchern mit elektrischer Energie als auch zur Speicherung von elektrischer Energie vorgesehen, die von Generatoren erzeugt wird.

Der Batterieverbund 35 weist vier Batterien 1 des zuvor beschriebenen Ausführungsbeispiels, drei elektrische Verbundleiter 36 und einen Verbundkopf 37 auf.

Der Verbundkopf 37 ist auf den Batteriedeckeln 12 der Batterien 1 angeordnet und weist einen Verbundzulaufkanal 38 mit einem Verbundzulaufanschluss 39 und einen Verbundablaufkanal 40 mit einem Verbundablaufanschluss 41 auf. Sowohl der Verbundzulaufkanal 38 als auch der Verbundablaufkanal 40 sind jeweils durch eine Durchgangsbohrung durch den ganzen Verbundkopf 37 gebildet. Jede der Durchgangsbohrungen ist an einem ihrer beiden Enden verschlossen. Das jeweils offene Ende mündet im Verbundzulaufanschluss 39 bzw. Verbundablaufanschluss 41.

Die ersten Batteriepole 6 und die zweiten Batteriepole 7 sind durch den Verbundkopf 37 hindurchgeführt. Dazu weist der Verbundkopf 37 zu den Batteriepolen 6, 7 passende Polöffnungen 42 auf. Dadurch sind die Batteriepole 6, 7 von außen und von einer Seite des Batterieverbunds 35 zugänglich, wodurch insbesondere ein Montieren und Demontieren der Verbundleiter 36 und weiterer Leiter an den Batteriepolen 6, 7 erleichtert ist.

Einerseits sind jeder der Batteriezuläufe 8 und der Verbundzulaufkanal 38 und andererseits jeder der Batterieabläufe 9 und der Verbundablaufkanal 40 unmittelbar und dicht für ein Temperiermedium über Verbundverbindungen 43 miteinander verbunden. Diese Verbundverbindungen 43 sind dadurch erreicht, dass die Bohrungen, welche den Verbundzulaufkanal 38 und den Verbundablaufkanal 40 bilden, die Polöffnungen 42 anschneiden, sodass im Betrieb des Batterieverbunds 35 ein Temperiermedium unmittelbar aus der Bohrung des Verbundzulaufkanals 38 in die Batteriezuläufe 8 strömt und dass Temperiermedium aus den Batterieabläufen 9 unmittelbar in die Bohrung des Verbundablaufkanals 40 strömt.

Einerseits sind jeder der ersten Batteriepole 6 und der Verbundkopf 37 und andererseits jeder der zweiten Batteriepole 7 und der Verbundkopf 37 jeweils durch eine O-Ring-Dichtung erster Art 44 für ein Temperiermedium zueinander abgedichtet. Diese O-Ring-Dichtungen erster Art 44 bewirken, dass ein Temperiermedium nicht zwischen den Batteriepolen 6, 7 und dem Verbundkopf 37 nach außen dringen kann. Weiter sind einerseits jeder der Batteriezuläufe 8 und der Verbundkopf 37 und andererseits jeder der Batterieabläufe 9 und der Verbundkopf 37 jeweils durch eine O-Ring-Dichtung zweiter Art 45 für ein Temperiermedium zueinander abgedichtet. Diese O-Ring-Dichtungen zweiter Art 45 bewirken, dass ein Temperiermedium nicht zwischen den Batteriezuläufen 8 oder Batterieabläufen 9 und dem Verbundkopf 37 nach außen dringen kann. Somit ist der Batterieverbund 35 abgesehen vom Verbundzulaufanschluss 39 und vom Verbundablaufanschluss 41 dicht für ein Temperiermedium.

Im Betrieb des Batterieverbunds 35 strömt ein Temperiermedium über den Verbundzulaufanschluss 39 in den Verbundzulaufkanal 38 hinein und strömt über den Verbundablaufanschluss 41 aus dem Verbundablaufkanal 40 hinaus. Durch die Verbundverbindungen 43 einerseits der Batteriezuläufe 8 mit dem Verbundzulaufkanal 38 und andererseits der Batterieabläufe 9 mit dem Verbundablaufkanal 40 sind die einzelnen Batterien 1 hydraulisch parallel zueinander geschaltet und strömt das Temperiermedium durch jede der Batterien 1. Durch die hydraulische Parallelschaltung liegen Temperaturen der Batterien 1 näher beieinander, als wenn die Batterien 1 hydraulisch in Reihe geschaltet sind, wodurch eine Temperaturverteilung des Batterieverbunds 35 homogener ist.

Jede der vier Batterien 1 und der Verbundkopf 37 sind durch jeweils vier Verbundschraubverbindungen 46 miteinander verbunden. Weiter weist, wie bereits beschrieben worden ist, jeder der ersten Batteriepole 6 und jeder der zweiten Batteriepole 7 jeweils eine Polschraubverbindung 26 auf. Und zwar weist jede der Polschraubverbindungen 26 ein Polgewinde 47 im Batteriepol 6, 7 und eine Polmutter 48 passend zum Polgewinde 47 auf. Die Polschraubverbindungen 26 fixieren den Verbundkopf 37 und die Batteriedeckel 12 zueinander und bewirken eine Dichtwirkung der zuvor beschriebenen O-Ring-Dichtungen 44, 45. Weiter fixieren sowohl die Polschraubverbindungen 26 als auch die Verbundschraubverbindungen 46 den Verbundkopf 37 und die vier Batterien 1 zueinander.

Die vier Batterien 1 sind durch die drei Verbundleiter 36 elektrisch miteinander verbunden. Und zwar sind die ersten Batteriepole 6 und die zweiten Batteriepole 7 durch die Verbundleiter 36 derart elektrisch miteinander verbunden, sodass die Batterien elektrisch in Reihe geschaltet sind. Dabei sind die Verbundleiter 36 und die Batteriepole 6, 7 durch die Polschraubverbindungen 26 elektrisch miteinander verbunden. Dazu weist jede der Polschraubverbindungen 26 eine zusätzliche Polmutter 49 auf und sind die Polgewinde 47 gestuft, sodass die Verbundleiter 36 auf den Batteriepolen 6, 7 aufliegen, wodurch eine elektrische Kontaktfläche zur Leitung von Strom entsteht.

Der Batterieverbund 35 weist Durchflussdrosseln 29 auf, sodass ein Temperiermedium durch jede der Batterien mit einer ausreichenden Durchflussrate strömt.

Jede der vier Batterien 1 weist, wie bereits beschrieben worden ist, eine Durchflussdrossel 29 auf. Jede dieser Durchflussdrosseln 29 ist durch den Batteriezulauf 8 und den ersten Batteriepol 6 gebildet. Eine Durchflussrate einer solchen Durchflussdrossel 29 ist durch eine Form des ersten elektrischen Batteriepols 6 eingestellt.

In diesem Ausführungsbeispiel sind zusätzlich im Verbundkopf 37 vier weitere Durchflussdrosseln 29 angeordnet. Und zwar sind die Durchflussdrosseln 29 durch die Verbundverbindungen 43 zwischen einerseits dem Verbundzulaufkanal 38 und andererseits den Batteriezuläufen 8 gebildet. Eine Drosselwirkung der Durchflussdrosseln 29 ist durch eine freie Querschnittsfläche der Verbundverbindungen 43 eingestellt, durch welche ein Temperiermedium strömt.

Bei jeder der Batterien 1 ist auf einer Außenseite des Batteriedeckels 12 eine Überdrucköffnung 50 ausgebildet. Die Überdrucköffnung 50 verbindet den Batterieinnenraum 15 mit einem Außenraum 51 und ist durch eine spröde Berstscheibe 52 als Überdruckventil dicht für ein Temperiermedium verschlossen. Der Verbundkopf 37 weist eine Überdruckausnehmung 53 auf. Die Überdruckausnehmung 53 überdeckt die Überdrucköffnungen 50 der Batterien 1, sodass ein Überdruck aus den Batterien 1 über die Überdrucköffnungen 50 und die Überdruckausnehmung 53 nach außen in den Außenraum 51 abführbar ist.

Der Batterieverbund 35 weist eine elektrische Verbundschaltung 54 mit einer elektrischen Verbundschnittstelle 55 zur Kommunikation mit einem weiteren elektrischen Gerät auf. Weiter weist die Verbundschaltung 54 eine galvanische Trennung 56 für die Kommunikation über die Verbundschnittstelle 55 auf. Die Verbundschaltung 54 ist zur Überwachung des Batterieverbunds 35 und zur Kommunikation über die Verbundschnittstelle 55 ausgebildet. Weiter ist die Verbundschaltung 54 zur Versorgung aus einer der vier Batterien 1 ausgebildet und wird im Betrieb des Batterieverbunds 35 aus einer der vier Batterien 1 des Batterieverbunds 35 versorgt.

Die Verbundschaltung 54 ist auf einer Verbundplatine 57 realisiert und die Verbundplatine 57 ist auf dem Verbundkopf 37 angeordnet. Der Verbundkopf 37 weist eine Platinenausnehmung 58 auf und die Verbundplatine 57 ist in der Platinenausnehmung 58 versenkt angeordnet. Die versenkte Anordnung der Verbundplatine 57 ist derart, dass sie außerhalb der Platinenausnehmung 58 nicht über den Verbundkopf 37 hinausragt. Durch die versenkte Anordnung der Verbundplatine 57 ist diese geschützt und ein Platzbedarf des Batterieverbunds 35 ist reduziert.

Die Verbundschaltung 54 weist vier Temperatursensoren 59 auf und ist zur Messung von Temperaturen mit den Temperatursensoren 59 ausgebildet. Die Temperatursensoren 59 sind zur Messung von Temperaturen des Batterieverbunds 35 ausgebildet und am Batterieverbund 35 angeordnet. Die Anordnung der Temperatursensoren 59 am Batterieverbund 35 ist derart, dass bei jeder der vier Batterien 1 auf einer Außenseite des Batteriedeckels 12 eine Sensorausnehmung 60 ausgebildet ist und jeweils einer der Temperatursensoren 59 in der Sensorausnehmung 60 angeordnet ist. Die Ausbildung der Sensorausnehmungen 60 in den Batteriedeckeln 12 ist derart, dass ein thermischer Widerstand zwischen den Temperatursensoren 59 und einem im Betrieb des Batterieverbunds 35 in den Batterieinnenräumen 15 befindlichen Temperiermediums möglichst gering ist.

Die Verbundschaltung 54 ist weiter ausgebildet, Differenztemperaturen aus den mit den Temperatursensoren 59 gemessenen Temperaturen zu bilden, die Differenztemperaturen mit einer vorgegebenen zulässigen Maximaldifferenztemperatur zu vergleichen und ein Überschreiten der Maximaldifferenztemperatur zu signalisieren. Somit sind Differenztemperaturen überwachbar. Diese Ausbildung der Verbundschaltung 54 ist allgemein ab mindestens zwei Temperatursensoren 59 gegeben.

Weiter ist die Verbundschaltung 54 zur Messung einer Spannung und zum Bestimmen und zum Einstellen eines Ladezustands einer jeden der vier Batterien 1 ausgebildet. Insbesondere werden die Ladezustände der vier Batterien 1 derart eingestellt, dass sie einander gleich sind. Zum Beispiel wird der Ladezustands der Batterien 1 aus den Spannungen der Batterien 1 unter Verwendung einer Kennlinie bestimmt, welche den Ladezustand der Batterien 1 in Abhängigkeit der Spannung wiedergibt.

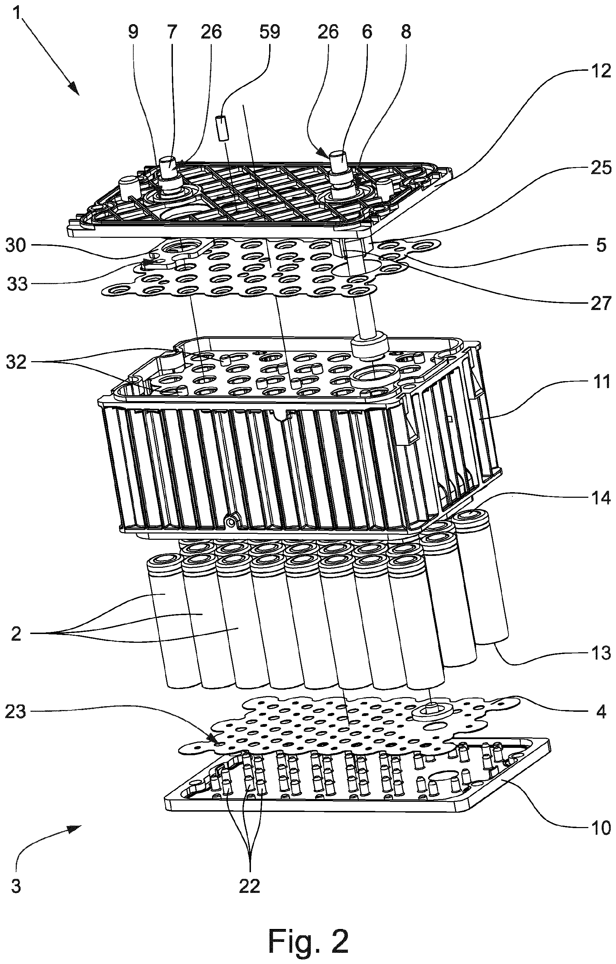

Wenn in der Beschreibung des Ausführungsbeispiels auf eine Mehrzahl einer Komponente in einer Figur verwiesen wird und das zur Komponente gehörige Bezugszeichen in der Figur nicht auf alle Komponenten verweist, sind dennoch alle Komponenten gemeint. Zum Beispiel wird in der Beschreibung auf die Zellen verwiesen und in Figur 2 verweist das Bezugszeichen 2 nur auf drei der Zellen. Dennoch sind alle Zellen gemeint.

### Bezugszeichen

- 1: Batterie
- 2: Zelle
- 3: Batteriegehäuse
- 4: erster elektrischer Zellverbinder
- 5: zweiter elektrischer Zellverbinder
- 6: erster elektrischer Batteriepol
- 7: zweiter elektrischer Batteriepol
- 8: Batteriezulauf
- 9: Batterieablauf
- 10: Batterieboden
- 11: Batterieträger
- 12: Batteriedeckel
- 13: erster elektrischer Zellkontakt
- 14: zweiter elektrischer Zellkontakt
- 15: Batterieinnenraum
- 16: Bodenkontaktfläche
- 17: erste Nut
- 18: erste Feder
- 19: Deckelkontaktfläche
- 20: zweite Nut
- 21: zweite Feder
- 22: Bodenaufnahme
- 23: Bodenausnehmung
- 24: Trägeraufnahme
- 25: Batteriepolhalterung
- 26: Polschraubverbindung
- 27: Batteriepolausnehmung
- 28: Batteriezulaufquerschnittsfläche
- 29: Durchflussdrossel
- 30: Batteriepolkragen
- 31: Kragenverbindung
- 32: Kragenvorsprung
- 33: Kragenausnehmung
- 34: Batterieablaufquerschnittsfläche
- 35: Batterieverbund
- 36: Verbundleiter
- 37: Verbundkopf
- 38: Verbundzulaufkanal
- 39: Verbundzulaufanschluss
- 40: Verbundablaufkanal
- 41: Verbundablaufanschluss
- 42: Polöffnungen
- 43: Verbundverbindung
- 44: O-Ring-Dichtung erster Art
- 45: O-Ring-Dichtung zweiter Art
- 46: Verbundschraubverbindung
- 47: Polgewinde
- 48: Polmutter
- 49: zusätzliche Polmutter
- 50: Überdrucköffnung
- 51: Außenraum
- 52: Berstscheibe
- 53: Überdruckausnehmung
- 54: elektrische Verbundschaltung
- 55: elektrische Verbundschnittstelle
- 56: galvanische Trennung
- 57: Verbundplatine
- 58: Platinenausnehmung
- 59: Temperatursensor
- 60: Sensorausnehmung

## Patentansprüche

1. Batterieverbund (35) mit mindestens zwei Batterien (1) und mindestens einem elektrischen Verbundleiter (36),
wobei jede der Batterien (1) ein Batteriegehäuse (3), einen ersten elektrischen Batteriepol (6), einen zweiten elektrischen Batteriepol (7), einen Batteriezulauf (8) und einen Batterieablauf (9) für ein Temperiermedium und mindestens eine Zelle (2) aufweist,
wobei jedes der Batteriegehäuse (3) einen Batterieboden (10), einen Batterieträger (11) und einen Batteriedeckel (12) aufweist und der Batterieboden (10), der Batterieträger (11) und der Batteriedeckel (12) einen Batterieinnenraum (15) abgesehen vom Batteriezulauf (8) und vom Batterieablauf (9) dicht für ein Temperiermedium umschließen,
wobei die mindestens eine Zelle (2) einer jeden der Batterien (1) im Batterieinnenraum (15) der Batterie (1) zur Umspülung mit einem Temperiermedium angeordnet ist und
wobei die mindestens zwei Batterien (1) durch den mindestens einen Verbundleiter (36) elektrisch miteinander verbunden sind,
**dadurch gekennzeichnet,**
**dass** bei jeder der Batterien (1) der erste Batteriepol (6) durch den Batteriezulauf (8) und der zweite Batteriepol (7) durch den Batterieablauf (9) aus dem Batterieinnenraum (15) nach außen geführt sind und dass sowohl der Batteriezulauf (8) als auch der Batterieablauf (9) im Batteriedeckel (12) angeordnet sind,
**dass** der Batterieverbund (35) einen Verbundkopf (37) aufweist und der Verbundkopf (37) auf den Batteriedeckeln (12) angeordnet ist,
**dass** der Verbundkopf (37) einen Verbundzulaufkanal (38) mit einem Verbundzulaufanschluss (39) und einen Verbundablaufkanal (40) mit einem Verbundablaufanschluss (41) aufweist,
**dass** einerseits jeder der Batteriezuläufe (8) und der Verbundzulaufkanal (38) und andererseits jeder der Batterieabläufe (9) und der Verbundablaufkanal (40) unmittelbar und dicht für ein Temperiermedium miteinander verbunden sind und
**dass** der Batterieverbund (35) abgesehen vom Verbundzulaufanschluss (39) und vom Verbundablaufanschluss (41) dicht für ein Temperiermedium ist.

2. Batterieverbund (35) nach Anspruch 1, **dadurch gekennzeichnet, dass** der Verbundkopf (37) und die Batterien (1) miteinander verbunden sind, vorzugsweise durch jeweils mindestens eine Verbundschraubverbindung (46).

3. Batterieverbund (35) nach Anspruch 1 oder 2, **dadurch gekennzeichnet, dass** der Batterieverbund (35) mindestens eine Durchflussdrossel (29) aufweist, sodass ein Temperiermedium durch jede der Batterien (1) mit einer ausreichenden Durchflussrate strömt und dass vorzugsweise eine Durchflussrate durch die Durchflussdrossel (29) einstellbar ist.

4. Batterieverbund (35) nach Anspruch 3, **dadurch gekennzeichnet, dass** die mindestens eine Durchflussdrossel (29) im Verbundkopf (37) angeordnet ist.

5. Batterieverbund (35) nach Anspruch 3 oder 4, **dadurch gekennzeichnet, dass** die mindestens eine Durchflussdrossel (29) in einer der Batterien (1) angeordnet ist.

6. Batterieverbund (35) nach Anspruch 5, **dadurch gekennzeichnet, dass** die mindestens eine Durchflussdrossel (29) zumindest teilweise durch den Batteriezulauf (8) und den ersten Batteriepol (6) gebildet ist und durch eine Form des ersten Batteriepols (6) eine Durchflussrate eines Temperiermediums eingestellt ist.

7. Batterieverbund (35) nach einem der Ansprüche 1 bis 6, **dadurch gekennzeichnet, dass** die ersten Batteriepole (6) und die zweiten Batteriepole (7) durch Polöffnungen (42) im Verbundkopf (37) hindurchgeführt sind.

8. Batterieverbund (35) nach Anspruch 7, **dadurch gekennzeichnet, dass** einerseits jeder der ersten Batteriepole (6) und der Verbundkopf (37) und andererseits jeder der zweiten Batteriepole (7) und der Verbundkopf (37) jeweils durch eine Dichtung für ein Temperiermedium zueinander abgedichtet sind und dass vorzugsweise die Dichtungen O-Ring-Dichtungen (44) sind.

9. Batterieverbund (35) nach Anspruch 7 oder 8, **dadurch gekennzeichnet, dass** einerseits jeder der Batteriezuläufe (8) und der Verbundkopf (37) und andererseits jeder der Batterieabläufe (9) und der Verbundkopf (37) jeweils durch eine Dichtung für ein Temperiermedium zueinander abgedichtet sind und dass vorzugsweise die Dichtungen O-Ring-Dichtungen (45) sind.

10. Batterieverbund (35) nach Anspruch 9, **dadurch gekennzeichnet, dass** jeder der ersten Batteriepole (6) und jeder der zweiten Batteriepole (7) jeweils eine Polschraubverbindung (26) aufweist, dass die Polschraubverbindungen (26) den Verbundkopf (37) und die Batteriedeckel (12) zueinander fixieren und eine Dichtwirkung der Dichtungen (44, 45) bewirken.

11. Batterieverbund (35) nach einem der Ansprüche 1 bis 10, **dadurch gekennzeichnet, dass** der Verbundzulaufkanal (38) und/oder der Verbundablaufkanal (40) jeweils zumindest teilweise durch Bohrungen bzw. eine Bohrung gebildet sind.

12. Batterieverbund (35) nach einem der Ansprüche 1 bis 11, **dadurch gekennzeichnet, dass** mindestens in einem der Batteriedeckel (12) ein erster Teil einer formschlüssigen Steckverbindung und im Verbundkopf (37) ein zweiter Teil der formschlüssigen Verbindung ausgebildet sind, dass der erste Teil der formschlüssigen Verbindung und der zweite Teil der formschlüssigen Verbindung ineinander eingesetzt sind und dass die formschlüssige Verbindung den mindestens einen Batteriedeckel (12) und den Verbundkopf (37) zueinander anordnet und lateral fixiert.

13. Batterieverbund (35) nach einem der Ansprüche 1 bis 12, **dadurch gekennzeichnet, dass** der mindestens eine Verbundleiter (36) die ersten Batteriepole (6) und die zweiten Batteriepole (7) elektrisch verbindet, sodass die Batterien (1) elektrisch entweder parallel oder in Reihe geschaltet sind, und dass vorzugsweise der mindestens eine Verbundleiter (36) und die ersten Batteriepole (6) und zweiten Batteriepole (7) durch Polschraubverbindungen (26) miteinander verbunden sind.

14. Batterieverbund (35) nach einem der Ansprüche 1 bis 13, **dadurch gekennzeichnet, dass** auf einer Außenseite mindestens einer der Batteriedeckel (12) eine Überdrucköffnung (50) ausgebildet und die Überdrucköffnung (50) durch eine spröde Berstscheibe (52) als Überdruckventil dicht für ein Temperiermedium verschlossen ist, dass der Verbundkopf (37) eine Überdruckausnehmung (53) aufweist und dass die Überdruckausnehmung (53) die Überdrucköffnung (50) zumindest teilweise überdeckt, sodass ein Überdruck aus der Batterie (1) über die Überdruckausnehmung (53) abführbar ist.

15. Batterieverbund (35) nach einem der Ansprüche 1 bis 14 **dadurch gekennzeichnet, dass** der Batterieverbund (35) eine elektrische Verbundschaltung (54) mit einer elektrischen Verbundschnittstelle (55) aufweist, dass die Verbundschaltung (54) zur Überwachung des Batterieverbunds (35) und zur Kommunikation über die Verbundschnittstelle (55) ausgebildet ist, dass vorzugsweise die Verbundschnittstelle (55) eine galvanische Trennung (56) für die Kommunikation aufweist und dass vorzugsweise die Verbundschaltung (54) zur Versorgung aus mindestens einer der Batterien (1) ausgebildet ist.

16. Batterieverbund (35) nach Anspruch 15, **dadurch gekennzeichnet, dass** die Verbundschaltung (54) auf einer Verbundplatine (57) realisiert ist, dass die Verbundplatine (57) auf dem Verbundkopf (37) angeordnet ist und dass vorzugsweise der Verbundkopf (37) eine Platinenausnehmung (58) aufweist und die Verbundplatine (57) in der Platinenausnehmung (58) versenkt angeordnet ist.

17. Batterieverbund (35) nach Anspruch 15 oder 16, **dadurch gekennzeichnet, dass** die Verbundschaltung (54) mindestens einen Temperatursensor (59) aufweist, dass die Verbundschaltung (54) zur Messung einer Temperatur mit dem Temperatursensor (59) ausgebildet ist und dass vorzugsweise auf einer Außenseite mindestens einer der Batteriedeckel (12) eine Sensorausnehmung (60) ausgebildet und in der Sensorausnehmung (60) der Temperatursensor (59) angeordnet ist.

18. Batterieverbund (35) nach Anspruch 17, **dadurch gekennzeichnet, dass** die Verbundschaltung (54) einen weiteren Temperatursensor (59) aufweist, dass die Verbundschaltung (54) zur Messung einer Temperatur mit dem weiteren Temperatursensor (59) ausgebildet ist und dass vorzugsweise auf der Außenseite eines weiteren der Batteriedeckel (12) eine Sensorausnehmung (60) ausgebildet ist und in der Sensorausnehmung (60) der weitere Temperatursensor (59) angeordnet ist.

19. Batterieverbund (35) nach einem der Ansprüche 15 bis 18, **dadurch gekennzeichnet, dass** die Verbundschaltung (54) zur Messung einer Spannung mindestens einer der Batterien (1) und/oder zum Bestimmen und/oder zum Einstellen eines Ladezustands von mindestens einer der Batterien (1) ausgebildet ist.

## Claims

1. Battery group (35) with at least two batteries (1) and at least one electrical group conductor (36),
wherein each of the batteries (1) comprises a battery housing (3), a first electrical battery pole (6), a second electrical battery pole (7), a battery inflow (8) and a battery outflow (9) for a thermoregulation medium and at least one cell (2),
wherein each of the battery housings (3) comprises a battery base (10), a battery carrier (11) and a battery cap (12) and the battery base (10), the battery carrier (11) and the battery cap (12) enclose a battery interior (15) in a leakproof manner, apart from the battery inflow (8) and the battery outflow (9), for a thermoregulation medium,
wherein the at least one cell (2) of each of the batteries (1) is arranged in the battery interior (15) of the battery (1) for circulation with a thermoregulation medium, and
wherein the at least two batteries (1) are electrically connected to each other by the at least one group conductor (36),
**characterized in**
**that**, in each of the batteries (1), the first battery pole (6) is led out of the battery interior (15) through the battery inflow (8) and the second battery pole (7) is led out of the battery interior (15) through the battery outflow (9), and that both the battery inflow (8) and the battery outflow (9) are arranged in the battery cap (12)
**that** the battery group (35) has a group head (37) and the group head (37) is arranged on the battery caps (12)
**that** the group head (37) has a group inflow channel (38) with a group inflow terminal (39) and a group outflow channel (40) with a group outflow terminal (41),
**that**, on the one hand, each of the battery inflows (8) and the group inflow channel (38) and, on the other hand, each of the battery outflows (9) and the group outflow channel (40) are directly and connected to one another in a leakproof manner for a thermoregulation medium, and
**that** the battery group (35) is leakproof for a thermoregulation medium apart from the group inflow terminal (39) and the group outflow terminal (41).

2. Battery group (35) according to claim 1, **characterized in that** the group head (37) and the batteries (1) are connected to each other, preferably by at least one group screw connection (46) in each case.

3. Battery group (35) according to claim 1 or 2, **characterized in that** the battery group (35) comprises at least one flow restrictor (29) so that a thermoregulation medium flows through each of the batteries (1) at a sufficient flow rate and that preferably a flow rate is adjustable by the flow restrictor (29).

4. Battery group (35) according to claim 3, **characterized in that** the at least one flow restrictor (29) is arranged in the group head (37).

5. Battery group (35) according to claim 3 or 4, **characterized in that** the at least one flow restrictor (29) is arranged in one of the batteries (1).

6. Battery group (35) according to claim 5, **characterized in that** the at least one flow restrictor (29) is formed at least partially by the battery inflow (8) and the first battery pole (6), and a flow rate of a thermoregulation medium is set by a shape of the first battery pole (6).

7. Battery group (35) according to any one of claims 1 to 6, **characterized in that** the first battery poles (6) and the second battery poles (7) are passed through pole openings (42) in the group head (37).

8. Battery group (35) according to claim 7, **characterized in that** on the one hand each of the first battery poles (6) and the group head (37) and on the other hand each of the second battery poles (7) and the group head (37) are sealed off from one another in each case by a seal for a thermoregulation medium, and that preferably the seals are O-ring seals (44).

9. Battery group (35) according to claim 7 or 8, **characterized in that**, on the one hand, each of the battery inflows (8) and the group head (37) and, on the other hand, each of the battery outflows (9) and the group head (37) are each sealed off from one another by a seal for a thermoregulation medium, and that preferably the seals are O-ring seals (45).

10. Battery group (35) according to claim 9, **characterized in that** each of the first battery poles (6) and each of the second battery poles (7) has a pole screw connection (26), that the pole screw connections (26) fix the group head (37) and the battery cap (12) to each other and cause a sealing effect of the seals (44, 45).

11. Battery group (35) according to any one of claims 1 to 10, **characterized in that** the group inflow channel (38) and/or the group outflow channel (40) are each formed at least partially by bores or a bore hole.

12. Battery group (35) according to any one of claims 1 to 11, **characterized in that** a first part of a form-fitting plug-in connection is designed in at least one of the battery caps (12) and a second part of the form-fitting connection is designed in the group head (37), that the first part of the form-fitting connection and the second part of the form-fitting connection are inserted into one another, and that the form-fitting connection arranges the at least one battery cap (12) and the group head (37) with respect to one another and fixes them laterally.

13. Battery group(35) according to any one of claims 1 to 12, **characterized in that** the at least one group conductor (36) electrically connects the first battery poles (6) and the second battery poles (7), so that the batteries (1) are electrically connected either in parallel or in series, and that preferably the at least one group conductor (36) and the first battery poles (6) and second battery poles (7) are interconnected by pole screw connections (26).

14. Battery group (35) according to any one of claims 1 to 13, **characterized in that** an excess pressure opening (50) is designed on an outer side of at least one of the battery caps (12) and the excess pressure opening (50) is closed in a leakproof manner for a thermoregulation medium by a brittle bursting disc (52) as an excess pressure valve, that the group head (37) has an excess pressure recess (53) and that the excess pressure recess (53) at least partially covers the excess pressure opening (50) so that an excess pressure can be discharged from the battery (1) via the excess pressure recess (53).

15. Battery group (35) according to any one of claims 1 to 14, **characterized in that** the battery group (35) has an electrical group circuit (54) with an electrical group interface (55), that the group circuit (54) is designed for monitoring the battery group (35) and for communication via the group interface (55), that preferably the group interface (55) has a galvanic isolation (56) for communication, and that preferably the group circuit (54) is designed for supply from at least one of the batteries (1).

16. Battery group (35) according to claim 15, **characterized in that** the group circuit (54) is implemented on a group circuit board (57), that the group circuit board (57) is arranged on the group head (37), and that preferably the group head (37) has a circuit board recess (58) and the group circuit board (57) is arranged recessed in the circuit board recess (58).

17. Battery group (35) according to claim 15 or 16, **characterized in that** the group circuit (54) has at least one temperature sensor (59), that the group circuit (54) is designed to measure a temperature with the temperature sensor (59), and that a sensor recess (60) is preferably designed on an outer side of at least one of the battery caps (12) and the temperature sensor (59) is arranged in the sensor recess (60).

18. Battery group (35) according to claim 17, **characterized in that** the group circuit (54) has a further temperature sensor (59), that the group circuit (54) is designed to measure a temperature with the further temperature sensor (59), and that a sensor recess (60) is preferably designed on the outside of any one of the battery caps (12), and the further temperature sensor (59) is arranged in the sensor recess (60).

19. Battery group (35) according to any one of claims 15 to 18, **characterized in that** the group circuit (54) is designed for measuring a voltage of at least one of the batteries (1) and/or for determining and/or for setting a state of charge of at least one of the batteries (1).

## Revendications

1. Système de batteries (35) comprenant au moins deux batteries (1) et au moins un conducteur de système électrique (36),
chacune des batteries (1) comportant un boîtier de batterie (3), un premier pôle de batterie électrique (6), un deuxième pôle de batterie électrique (7), une entrée de batterie (8) et une sortie de batterie (9) destinées à un milieu de régulation de température et au moins une cellule (2),
chacun des boîtiers de batterie (3) comportant un fond de batterie (10), un support de batterie (11) et un couvercle de batterie (12), et le fond de batterie (10), le support de batterie (11) et le couvercle de batterie (12) enfermant, hermétiquement vis-à-vis d'un milieu de régulation de température, un espace de batterie intérieur (15) à l'exception de l'entrée de batterie (8) et de la sortie de batterie (9),
l'au moins une cellule (2) de chacune des batterie (1) étant disposée dans l'espace de batterie intérieur (15) de la batterie (1) afin d'être enrobée et lavée avec un milieu de régulation de température et
les au moins deux batteries (1) étant électriquement reliées l'une à l'autre par l'au moins un conducteur de système (36),
**caractérisé en ce que**
pour chacune des batteries (1), le premier pôle de batterie (6) et le deuxième pôle de batterie (7) sont amenés de l'espace de batterie intérieur (15) à l'extérieur respectivement par l'entrée de batterie (8) et par la sortie de batterie (9) et **en ce que** l'entrée de batterie (8) et la sortie de batterie (9) sont disposées dans le couvercle de batterie (12),
le système de batteries (35) comporte une tête de système (37) et la tête de système (37) est disposée sur les couvercles de batterie (12),
la tête de système (37) comporte un conduit d'entrée de système (38) pourvu d'un raccord d'entrée de système (39) et un conduit de sortie de système (40) pourvu d'un raccord de sortie de système (41),
d'une part chacune des entrées de batterie (8) et le conduit d'entrée de système (38) et d'autre part chacune des sorties de batterie (9) et le conduit de sortie de système (40) sont reliés entre eux directement et hermétiquement vis-à-vis d'un milieu de régulation de température et
le système de batteries (35) est hermétique vis-à-vis d'un milieu de régulation de température à l'exception du raccord d'entrée de système (39) et du raccord de sortie de système (41).

2. Système de batteries (35) selon la revendication 1, **caractérisé en ce que** la tête de système (37) et les batteries (1) sont reliées entre elles, de préférence à chaque fois par au moins un raccord de système à vis (46) .

3. Système de batteries (35) selon la revendication 1 ou 2, **caractérisé en ce que** le système de batteries (35) comporte au moins un limiteur de débit (29) de sorte qu'un milieu de régulation de température s'écoule à travers chacune des batteries (1) à un débit suffisant et que, de préférence, un débit à travers le limiteur de débit (29) soit réglable.

4. Système de batteries (35) selon la revendication 3, **caractérisé en ce que** l'au moins un limiteur de débit (29) est disposé dans la tête de système (37).

5. Système de batteries (35) selon la revendication 3 ou 4, **caractérisé en ce que** l'au moins un limiteur de débit (29) est disposé dans l'une des batteries (1).

6. Système de batteries (35) selon la revendication 5, **caractérisé en ce que** l'au moins un limiteur de débit (29) est formé au moins partiellement par l'entrée de batterie (8) et le premier pôle de batterie (6) et un débit d'un milieu de régulation de température est réglé par une forme du premier pôle de batterie (6).

7. Système de batteries (35) selon l'une des revendications 1 à 6, **caractérisé en ce que** les premiers pôles de batterie (6) et les deuxièmes pôles de batterie (7) sont guidés à travers des ouvertures de pôle (42) ménagées dans la tête de système (37).

8. Système de batteries (35) selon la revendication 7, **caractérisé en ce que** d'une part chacun des premiers pôles de batterie (6) et la tête de système (37) et d'autre part chacun des deuxièmes pôles de batterie (7) et la tête de système (37) sont rendus hermétiques les uns par rapport aux autres vis-à-vis d'un milieu de régulation de température à chaque fois par une garniture d'étanchéité et **en ce que** les garnitures d'étanchéité sont de préférence des garnitures d'étanchéité toriques (44).

9. Système de batteries (35) selon la revendication 7 ou 8, **caractérisé en ce que** d'une part chacune des entrées de batterie (8) et la tête de système (37) et d'autre part chacune des sorties de batterie (9) et la tête de système (37) sont rendues hermétiques entre eux vis-à-vis d'un milieu de régulation de température à chaque fois par une garniture d'étanchéité et **en ce que**, de préférence, les garnitures d'étanchéité sont des garnitures d'étanchéité toriques (45).

10. Système de batteries (35) selon la revendication 9, **caractérisé en ce que** chacun des premiers pôles de batterie (6) et chacun des deuxièmes pôles de batterie (7) comportent une liaison de pôle à vis (26), **en ce que** les liaisons de pôle à vis (26) fixent la tête de système (37) et le couvercle de batterie (12) l'un à l'autre et font en sorte que les garnitures d'étanchéité (44, 45) aient un effet d'étanchéité.

11. Système de batteries (35) selon l'une des revendications 1 à 10, **caractérisé en ce que** le conduit d'entrée de système (38) et/ou le conduit de sortie de système (40) sont chacun au moins partiellement formés par des alésages ou un alésage.

12. Système de batteries (35) selon l'une des revendications 1 à 11, **caractérisé en ce qu'**une première partie d'une liaison enfichable à complémentarité de formes est formée au moins dans l'un des couvercles de batterie (12) et une deuxième partie de la liaison à complémentarité de formes est formée dans la tête de système (37), **en ce que** la première partie de la liaison à complémentarité de formes et la deuxième partie de la liaison à complémentarité de formes sont insérées l'une dans l'autre et **en ce que** la liaison à complémentarité de formes dispose et fixe latéralement l'au moins un couvercle de batterie (12) et la tête de système (37) l'un par rapport à l'autre.

13. Système de batteries (35) selon l'une des revendications 1 à 12, **caractérisé en ce que** l'au moins un conducteur de système (36) relie électriquement les premiers pôles de batterie (6) et les deuxièmes pôles de batterie (7) de sorte que les batteries (1) soient montées électriquement en parallèle ou en série, et **en ce que**, de préférence, l'au moins un conducteur de système (36) et les premiers pôles de batterie (6) et les deuxièmes pôles de batterie (7) sont reliés les uns aux autres par des liaisons de pôle à vis (26).

14. Système de batteries (35) selon l'une des revendications 1 à 13, **caractérisé en ce qu'**une ouverture de surpression (50) est formée sur un côté extérieur d'au moins un des couvercles de batterie (12) et l'ouverture de surpression (50) est fermée hermétiquement vis-à-vis d'un milieu de régulation de température par un disque de rupture fragile (52) se présentant sous la forme d'une soupape de surpression, **en ce que** la tête de système (37) comporte un évidement de surpression (53) et **en ce que** l'évidement de surpression (53) recouvre au moins partiellement l'ouverture de surpression (50) de sorte que la surpression puisse être évacuée de la batterie (1) par l'évidement de surpression (53).

15. Système de batteries (35) selon l'une des revendications 1 à 14, **caractérisé en ce que** le système de batteries (35) comporte un circuit de système électrique (54) pourvu d'une interface de système électrique (55), **en ce que** le circuit de système (54) est conçu pour surveiller le système de batteries (35) et pour communiquer par le biais de l'interface de système (55), **en ce que** l'interface de système (55) comporte de préférence une isolation galvanique (56) destinée à la communication et **en ce que** le circuit de système (54) est de préférence conçu pour être alimenté par au moins une des batteries (1).

16. Système de batteries (35) selon la revendication 15, **caractérisé en ce que** le circuit de système (54) est réalisé sur une carte de système (57), **en ce que** la carte de système (57) est disposée sur la tête de système (37) et **en ce que** la tête de système (37) comporte de préférence un évidement de carte (58) et la carte de système (57) est disposée de manière encastrée dans l'évidement de carte (58).

17. Système de batteries (35) selon la revendication 15 ou 16, **caractérisé en ce que** le circuit de système (54) comporte au moins un capteur de température (59), **en ce que** le circuit de système (54) est conçu pour mesurer une température à l'aide du capteur de température (59) et **en ce qu'**un évidement de capteur (60) est de préférence formé sur un côté extérieur d'au moins un des couvercles de batterie (12) et le capteur de température (59) est disposé dans l'évidement de capteur (60).

18. Système de batteries (35) selon la revendication 17, **caractérisé en ce que** le circuit de système (54) comporte un autre capteur de température (59), **en ce que** le circuit de système (54) est conçu pour mesurer une température à l'aide de l'autre capteur de température (59) et **en ce qu'**un évidement de capteur (60) est de préférence formé sur le côté extérieur d'un autre des couvercles de batterie (12) et l'autre capteur de température (59) est disposé dans l'évidement de capteur (60).

19. Système de batteries (35) selon l'une des revendications 15 à 18, **caractérisé en ce que** le circuit de système (54) est conçu pour mesurer une tension d'au moins une des batteries (1) et/ou pour déterminer et/ou régler un état de charge d'au moins une des batteries (1).
